# EUROPEAN PATENT APPLICATION

(11) **EP 4 694 521 A1**
(43) Date of publication of application: **11.02.2026**
(21) Application number: 24785142.1
(22) Date of filing: 01.04.2024
(51) Int. Cl.: H04W 74/00, H04L 1/08, H04B 17/318, H04W 72/0457, H04W 72/0453, H04W 74/0833

(54) **METHOD AND DEVICE FOR TRANSMISSION AND RECEPTION OF RANDOM ACCESS PREAMBLE IN WIRELESS COMMUNICATION SYSTEM**

(30) Priority: 05.04.2023 US 202363457146 P; 31.10.2023 US 202363546736 P
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR); YANG, Suckchel, Seoul 06772 (KR); NOH, Yujin, Seoul 06772 (KR); KIM, Seonwook, Seoul 06772 (KR)
(74) Representative: Jung, Minkyu
(86) International application number: PCT/KR2024/004192
(87) International publication number: WO 2024/210436

(57) **Abstract**

A method according to an embodiment of the present disclosure includes receiving a random access channel (RACH) configuration, and transmitting a random access preamble based on a repetition number related to a feature combination. The RACH configuration includes a plurality of preamble configurations. Each of the plurality of preamble configurations is related to one feature combination. The repetition number is one of a plurality of repetition numbers based on the plurality of preamble configurations.

## Description

### [TECHNICAL FIELD]

The present disclosure relates to a device and method for transmitting and receiving a random access preamble in a wireless communication system.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to an Rel-17 feature combination, only one feature can be configured or a combination of a plurality of features can be configured in specific RACH resource partitioning. In Rel-18, a feature related to repetition of MSG1 is supported. In this instance, the repetition number (2, 4, or 8) may be set. In this case, among preamble indices, only one repetition number may be set/applied to preamble indices to which the MSG1 repetition feature is applied.

### [DISCLOSURE]

### [TECHNICAL PROBLEM]

It may be inefficient to use a fixed repetition number for all preambles to which the above-described MSG1 repetition feature is applied.

The present disclosure proposes a method for solving the problem described above.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method performed by a user equipment (UE) according to an embodiment of the present disclosure comprises receiving a Random Access CHannel (RACH) configuration, and transmitting a random access preamble based on a repetition number related to a feature combination.

The RACH configuration includes a plurality of preamble configurations. Each of the plurality of preamble configurations is related to one feature combination. The repetition number is one of a plurality of repetition numbers based on the plurality of preamble configurations.

The repetition number may be determined based on a Reference Signal Received Power (RSRP) among the plurality of repetition numbers.

The RACH configuration may include RACH configurations based on a BandWidth Part (BWP)-uplink common configuration.

The RACH configurations may include i) a RACH configuration in the BWP-uplink common configuration and ii) a RACH configuration based on each additional RACH configuration in the BWP-uplink common configuration.

Each preamble configuration based on the RACH configurations may include information for a set of preambles. On a bandwidth part (BWP), a set of preambles associated with each of the plurality of repetition numbers may be at most one.

The plurality of repetition numbers may be based on different values.

One or more features may be indicated based on the feature combination. The one or more features may include MSG1 repetitions.

The plurality of repetition numbers may be configured based on preamble configurations including a feature combination related to the MSG1 repetitions.

The plurality of repetition numbers may be related to a shared RACH occasion (RO).

The repetition number may be 2, 4 or 8.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting a Random Access CHannel (RACH) configuration, and receiving a random access preamble based on a repetition number related to a feature combination.

The RACH configuration includes a plurality of preamble configurations. Each of the plurality of preamble configurations is related to one feature combination. The repetition number is one of a plurality of repetition numbers based on the plurality of preamble configurations.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

### [ADVANTAGEOUS EFFECTS]

According to embodiments of the present disclosure, a random access preamble can be performed based on one of multiple repetition numbers. Accordingly, since various repetition numbers can be supported for the same feature (MSG1 repetition), repetition transmission of the random access preamble can be performed based on a repetition number most suitable for the channel quality.

In addition, signaling overhead of a RACH procedure can be reduced compared to when a fixed repetition number is configured/used. For example, if the repetition transmission of the random access preamble is performed based on many repetition numbers even in good channel conditions, unnecessary signaling overhead is caused. According to embodiments of the present disclosure, since the repetition transmission can be performed based on a repetition number suitable for the channel conditions, the RACH procedure can be improved in terms of signaling overhead.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [DESCRIPTION OF DRAWINGS]

FIG. 1 illustrates physical channels and general signal transmission used in a 3GPP system.
FIG. 2 illustrates RACH occasions for each preamble format.
FIG. 3 illustrates a random access procedure.
FIG. 4 illustrates an RACH partitioning related RRC parameter.
FIGS. 5 to 9 illustrate configuration of a repetition number based on additional RACH configuration.
FIGS. 10 to 15 illustrate configuration of a repetition number based on a feature combination.
FIG. 16 is a flowchart illustrating a method performed by a user equipment (UE) according to an embodiment of the present disclosure.
FIG. 17 is a flowchart illustrating a method performed by a base station (BS) according to another embodiment of the present disclosure.
FIG. 18 illustrates configurations of a first device and a second device according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### Physical Channel and General Signal Transmission

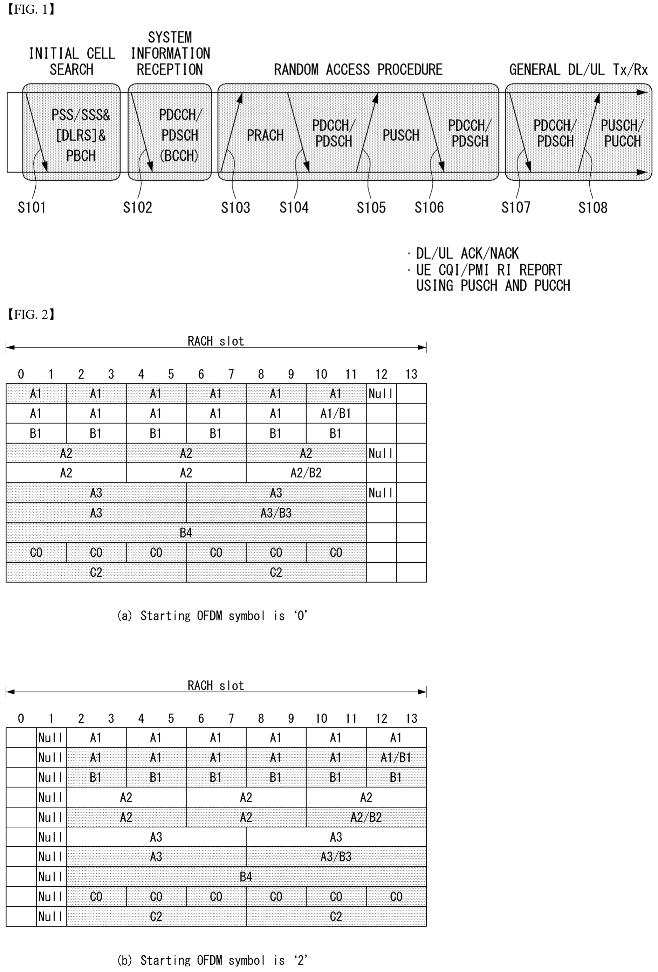

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

When there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

An RACH slot is described below.

An RACH slot includes one or multiple RACH Occasion(s).

Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.

A start OFDM symbol index in an RACH slot has {0,2,x} values for short preamble formats.

FIG. 2 illustrates RACH occasions for each preamble format.

Referring to FIG. 2, an RACH slot may include one or more RACH occasions (ROs) for each preamble format (e.g., A1, A2, ..., C2). (a) of FIG. 2 illustrates a case in which a starting OFDM symbol is '0', and (b) of FIG. 2 illustrates a case in which a starting OFDM symbol is '2' .

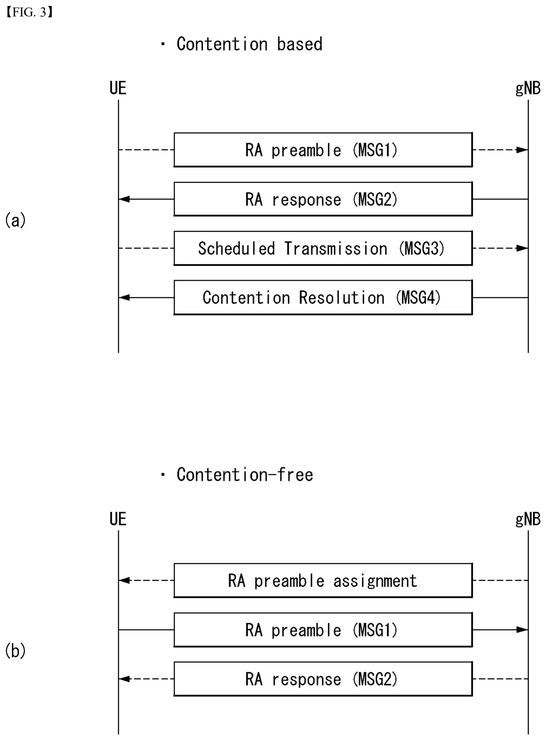

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.
- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

The following Table 1 shows configurations/operations related to the random access preamble.

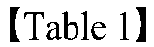

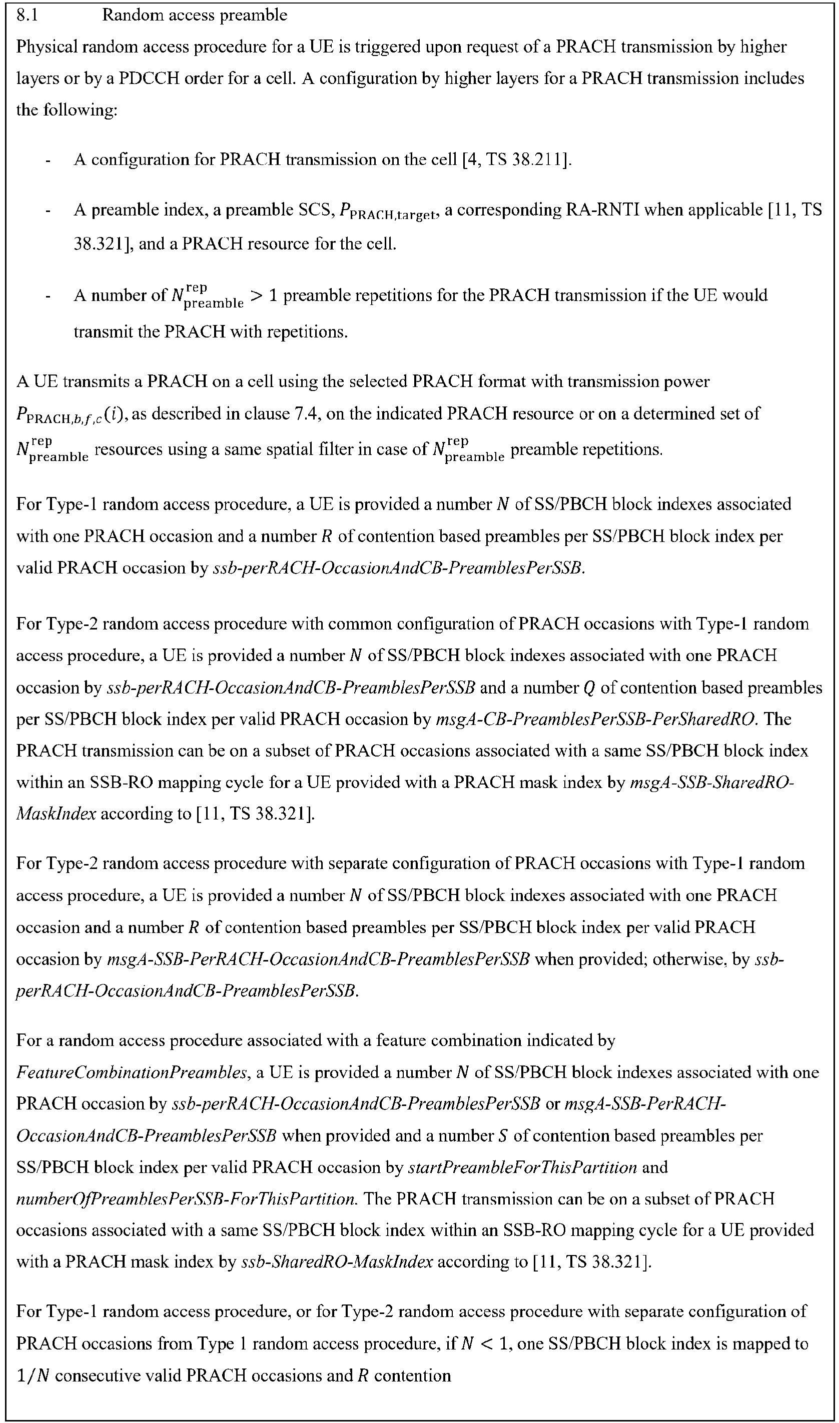

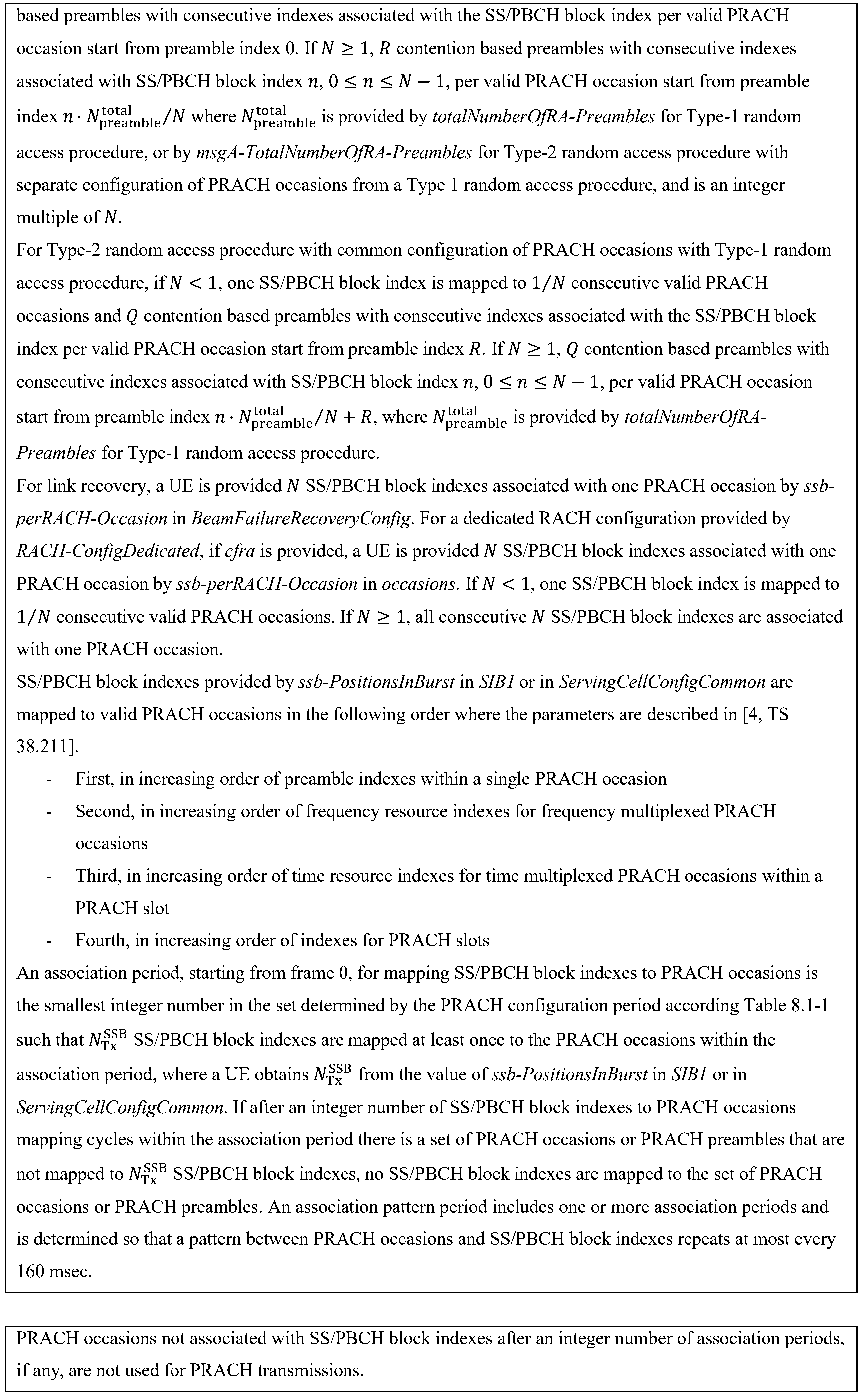

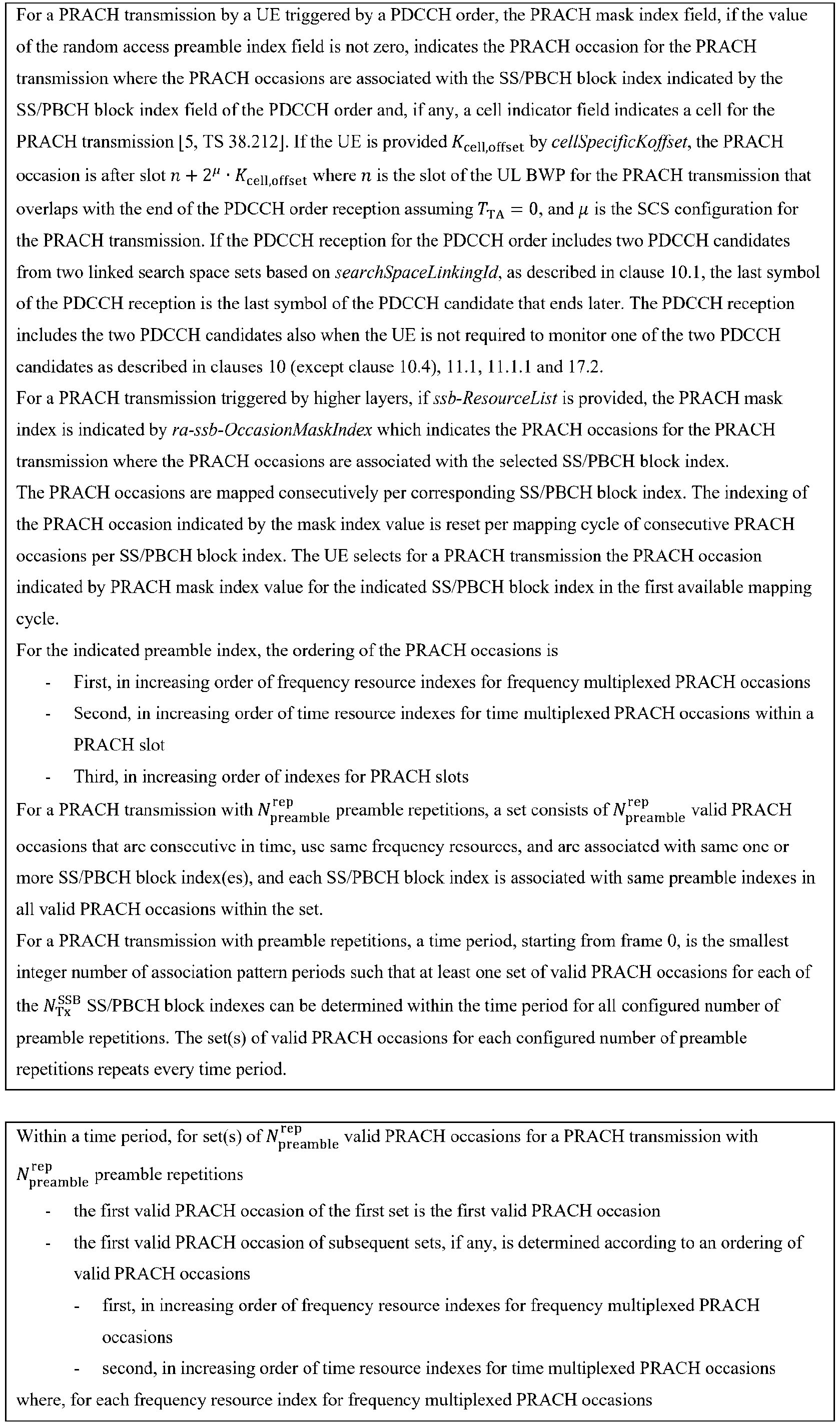

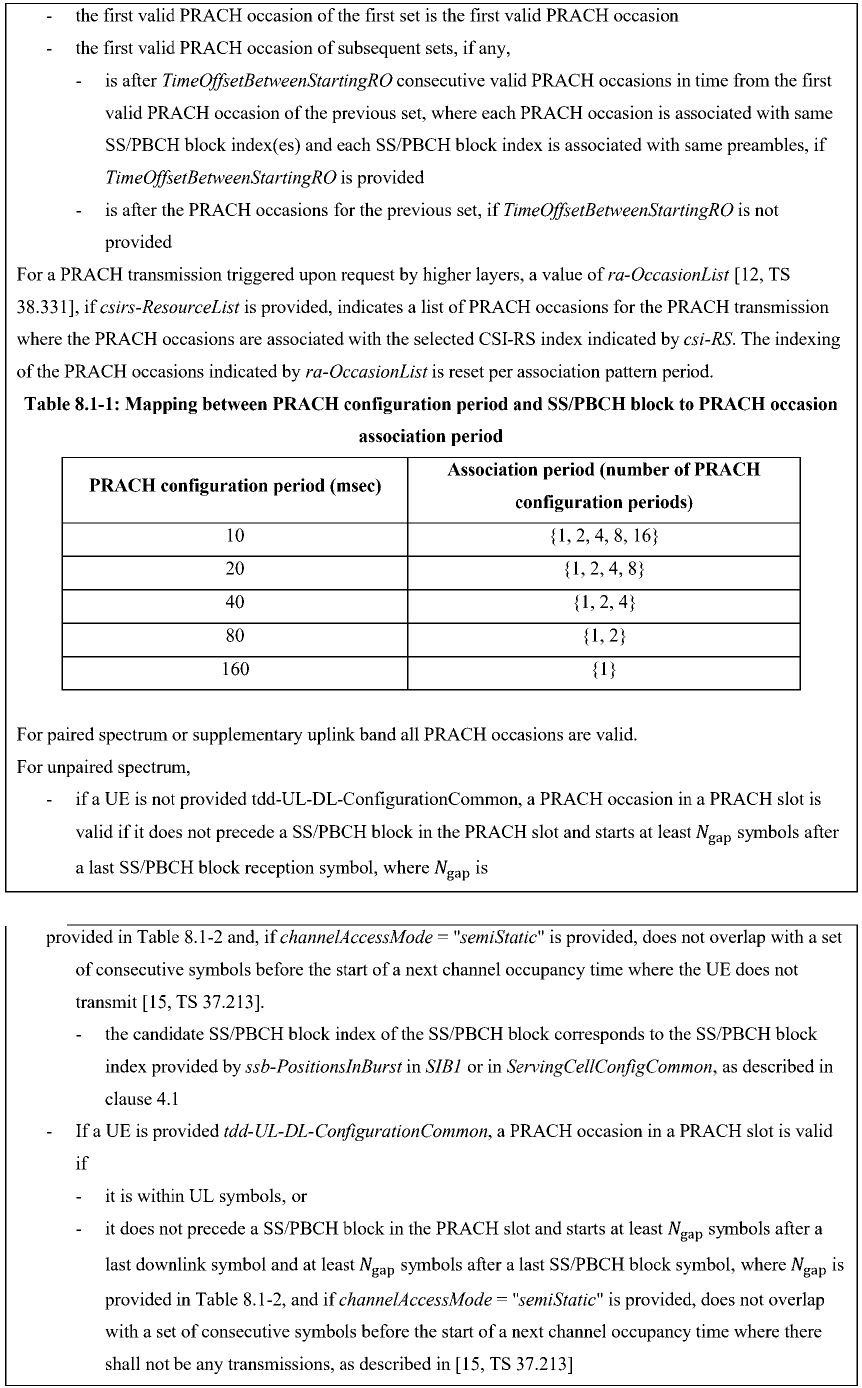

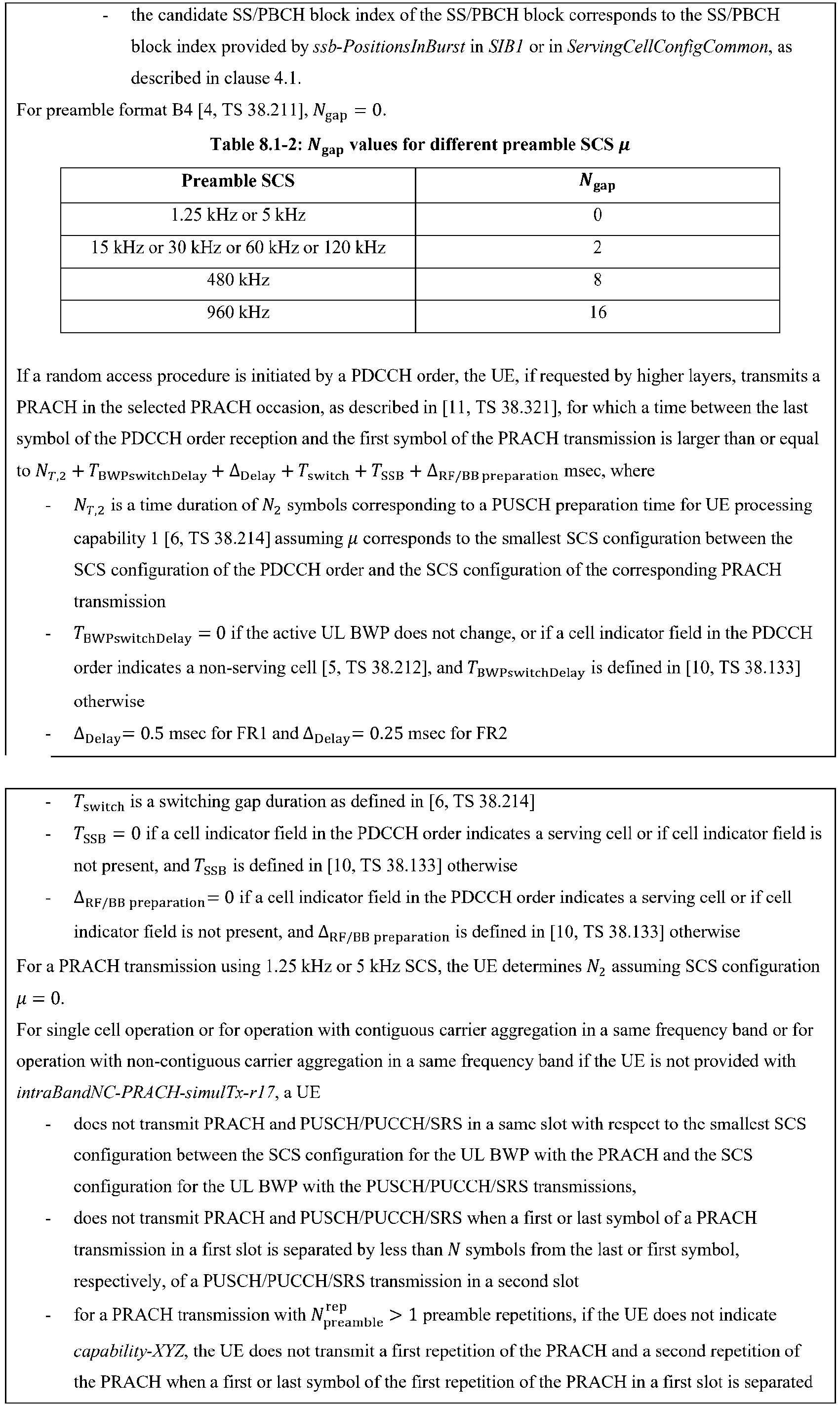

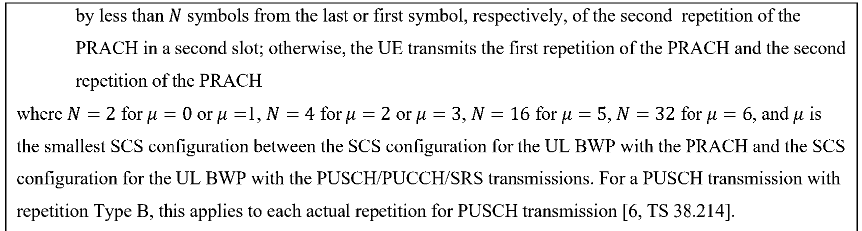

The configurations/definitions/operations according to Table 1 above may be referred to in order to clarify definitions/operations of embodiments to be described below. As an example, in an embodiment to be described below, ROs may refer to the valid PRACH occasions mentioned in Table 1. As an example, in an embodiment to be described below, multiple ROs having a same beam index may mean 1/N (where, N < 1) consecutive valid PRACH occasions to which one SS/PBCH index is mapped.

Tables 2 to 4 below illustrate PRACH configuration tables to which the embodiments to be described below may be applied.

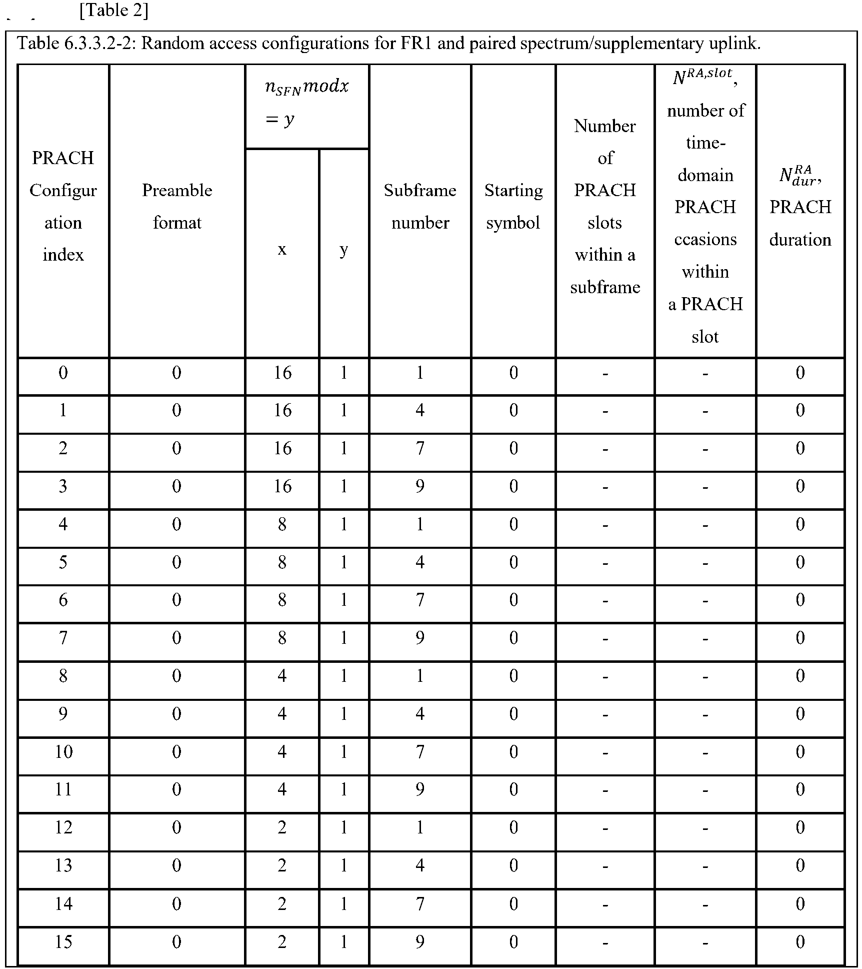

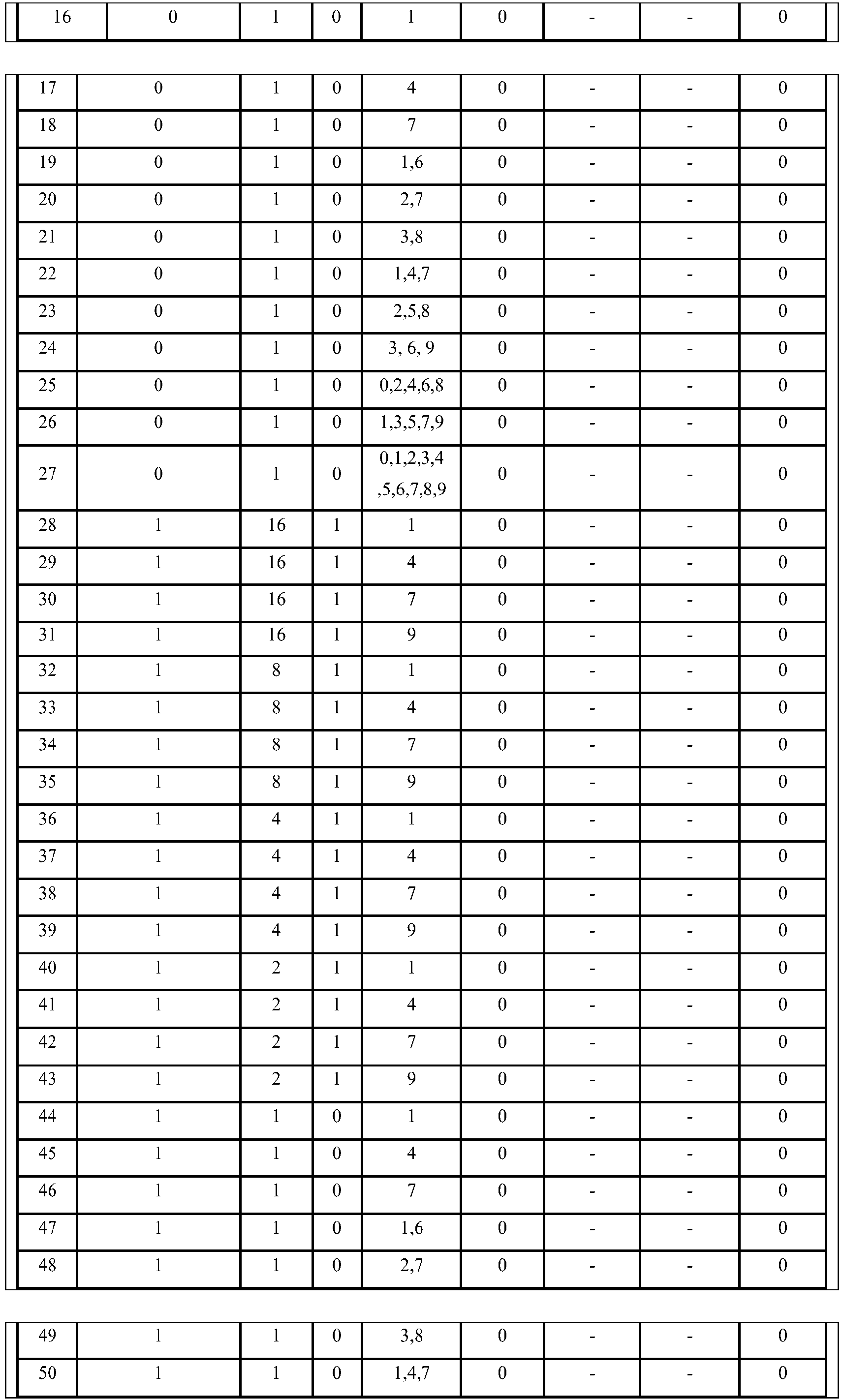

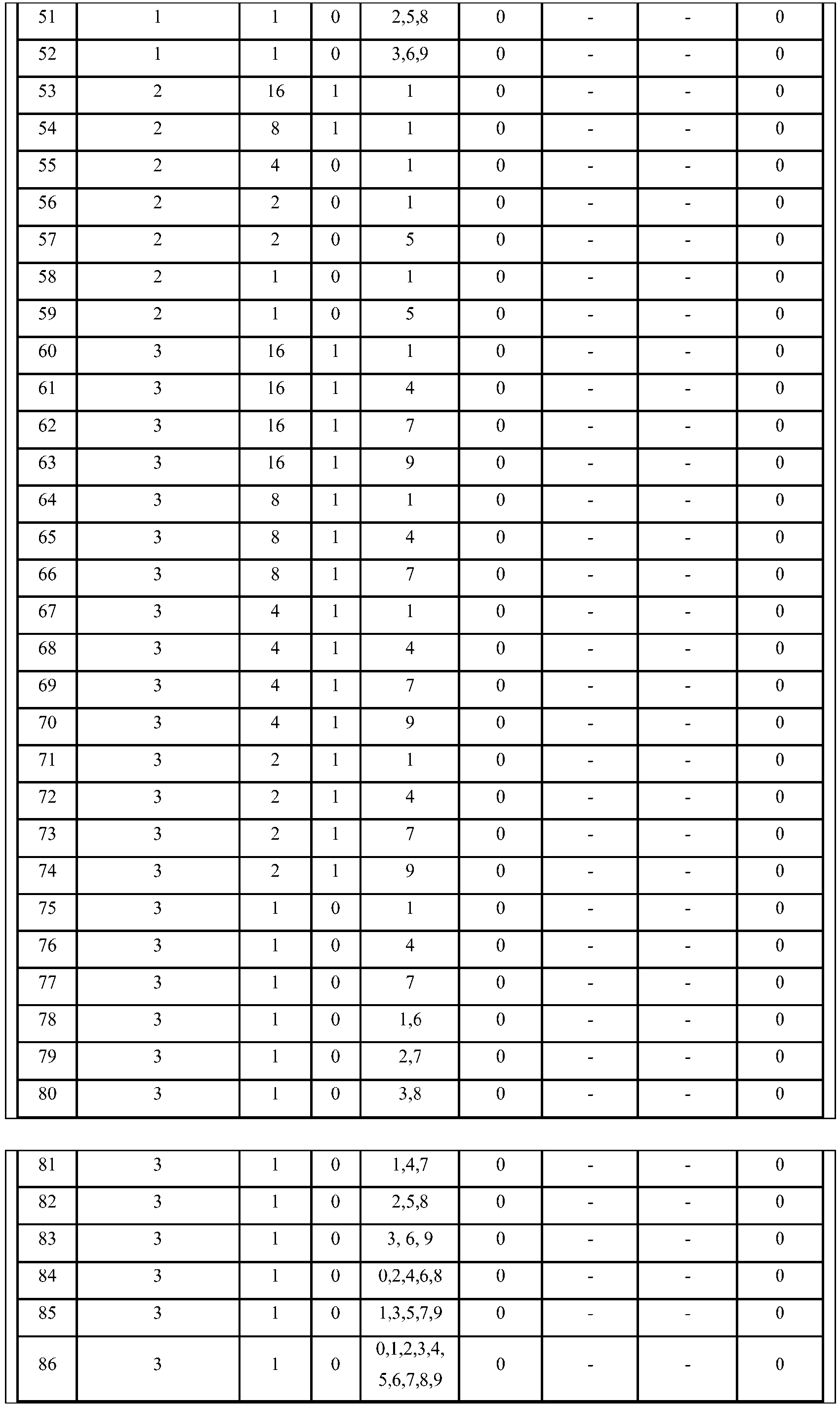

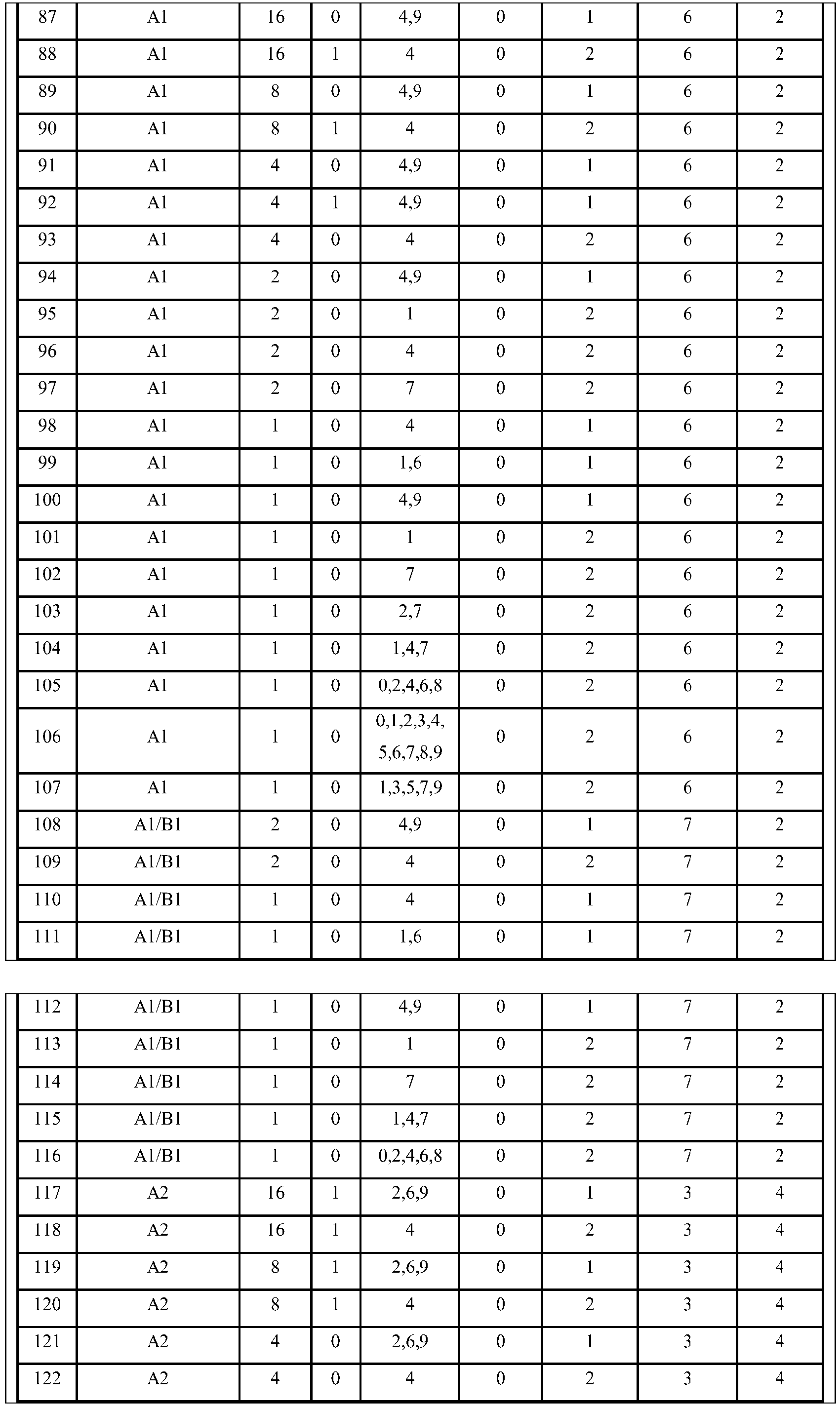

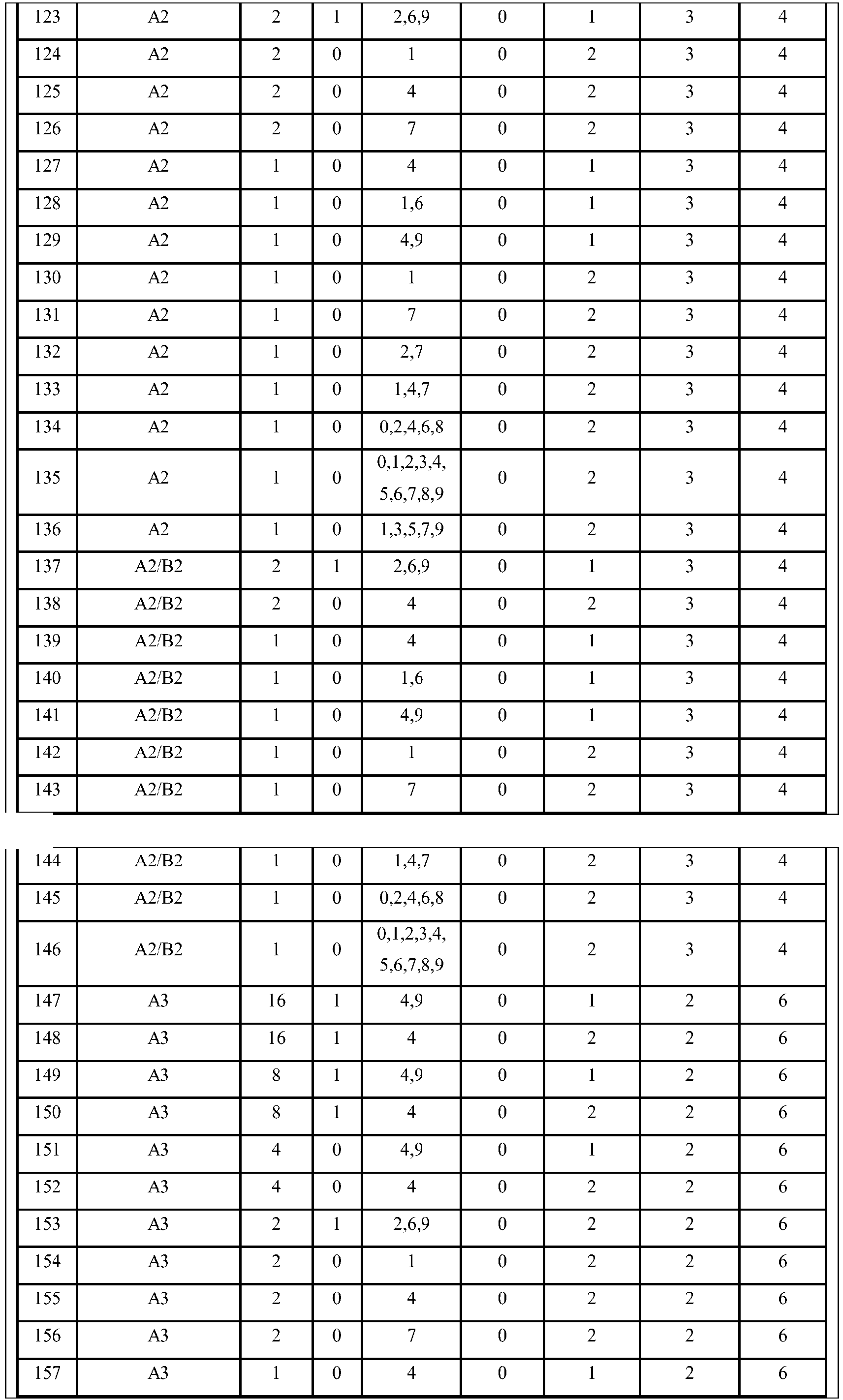

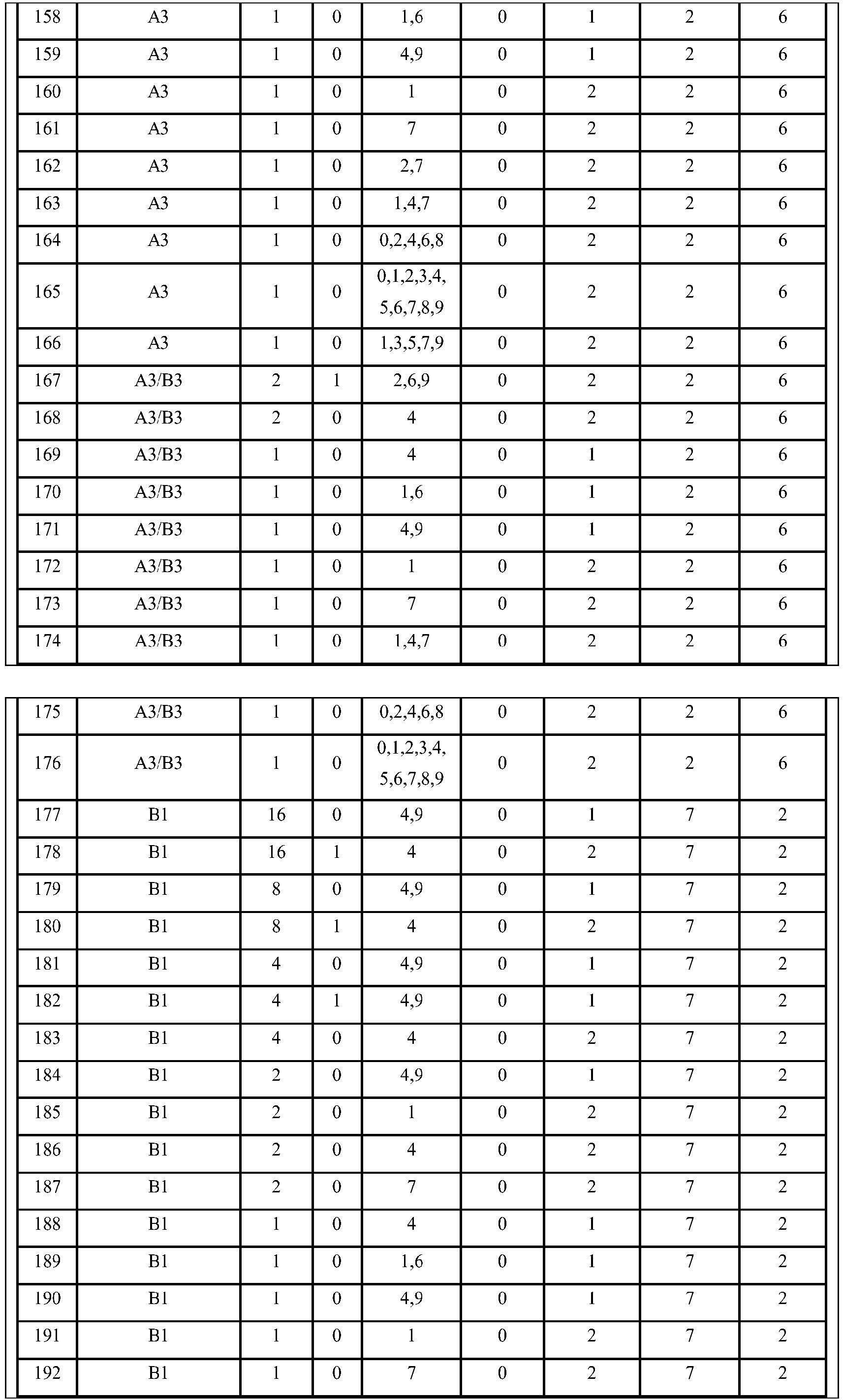

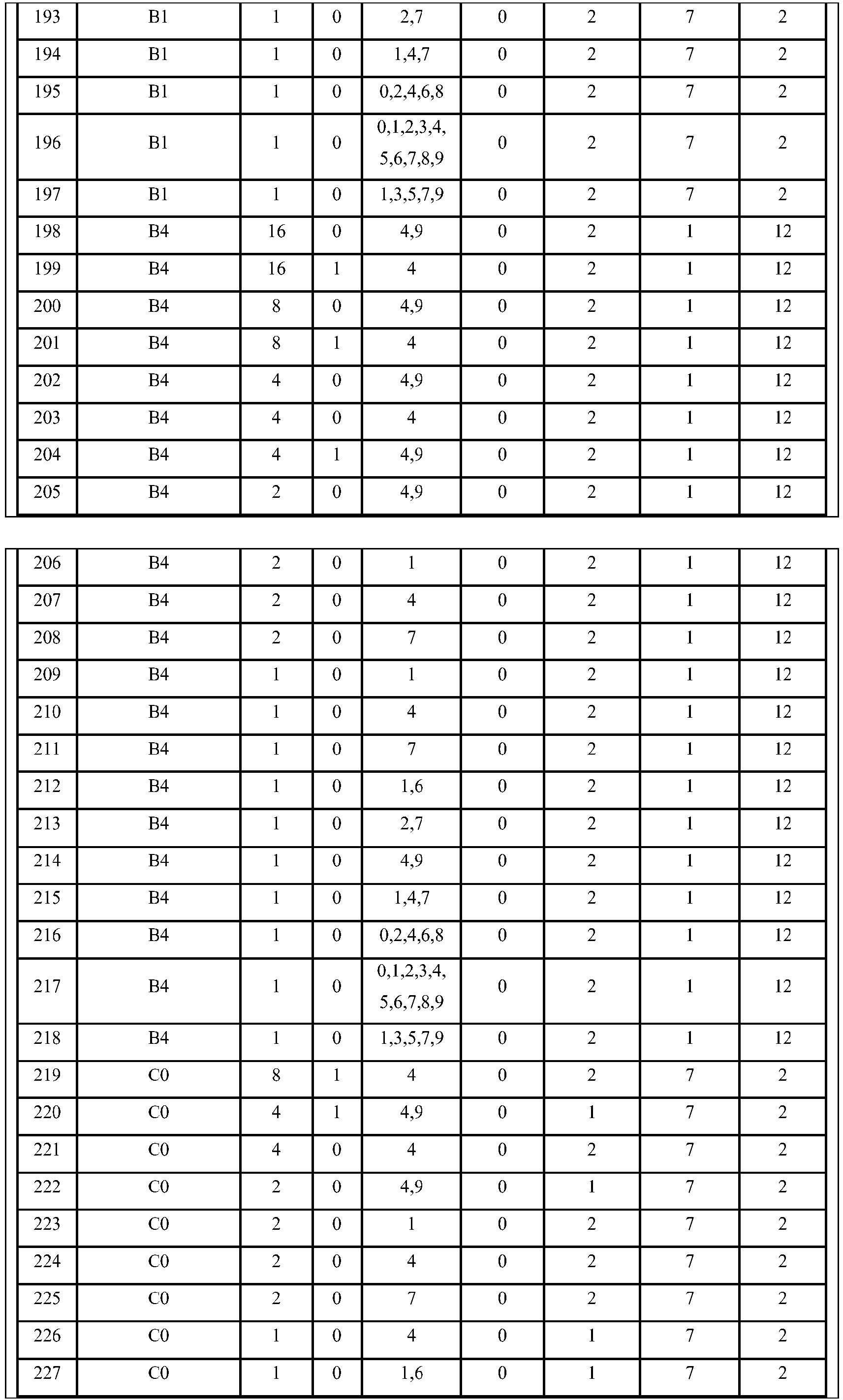

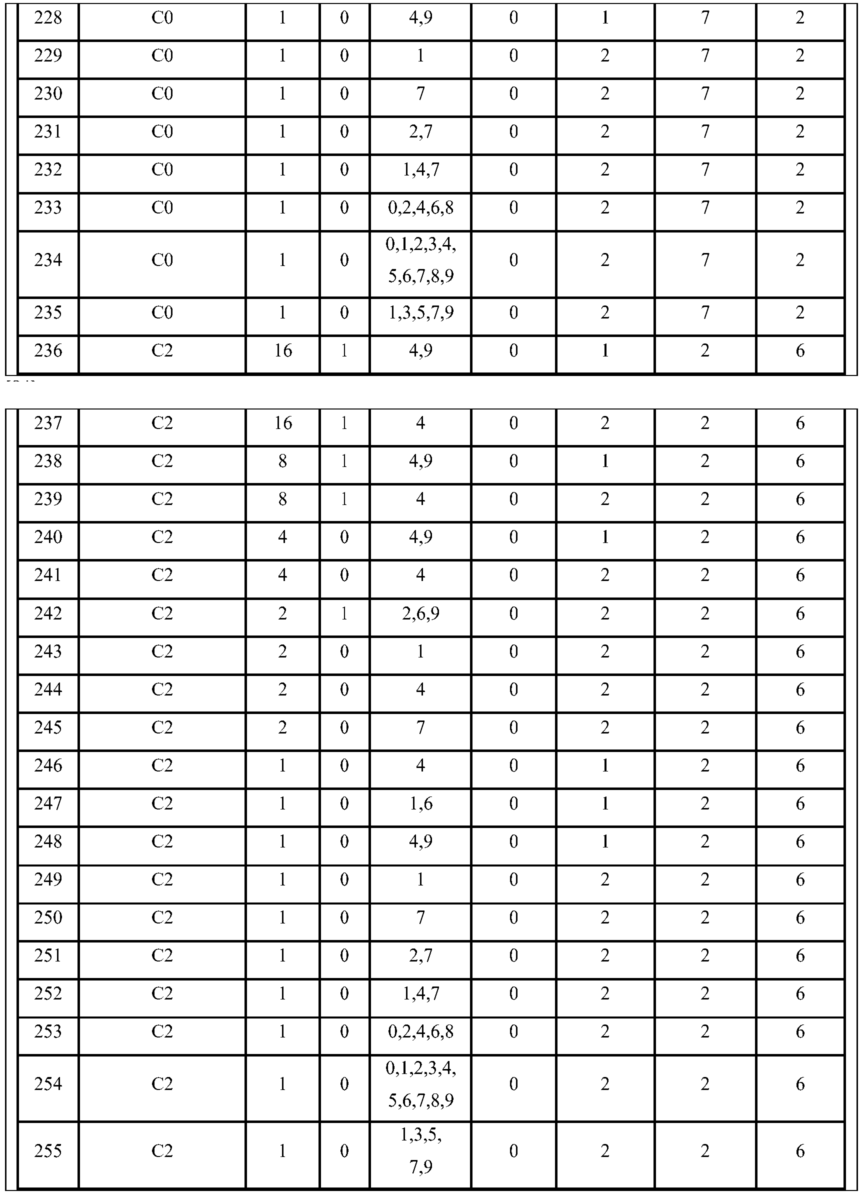

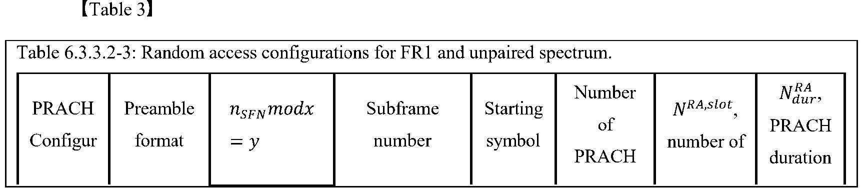

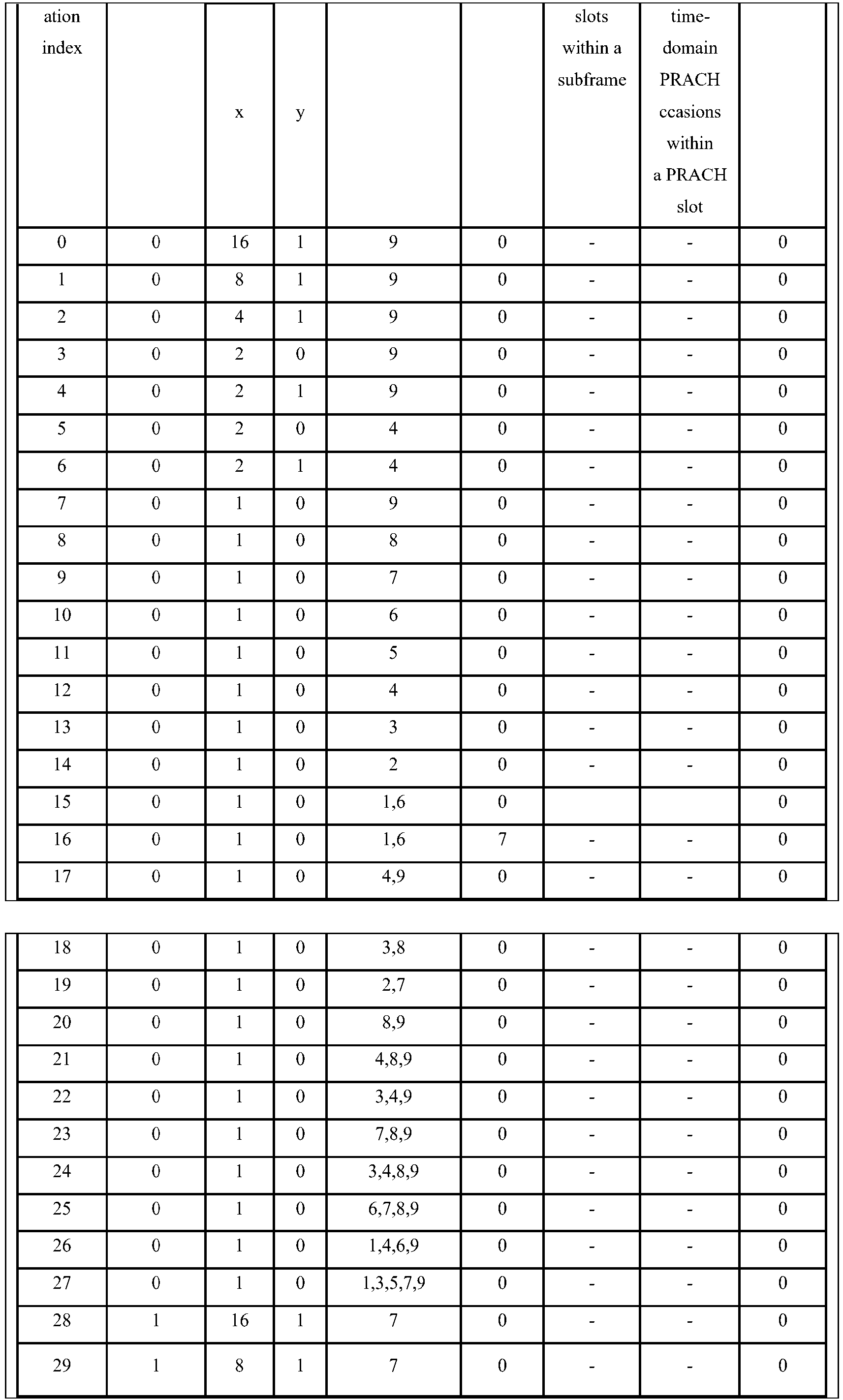

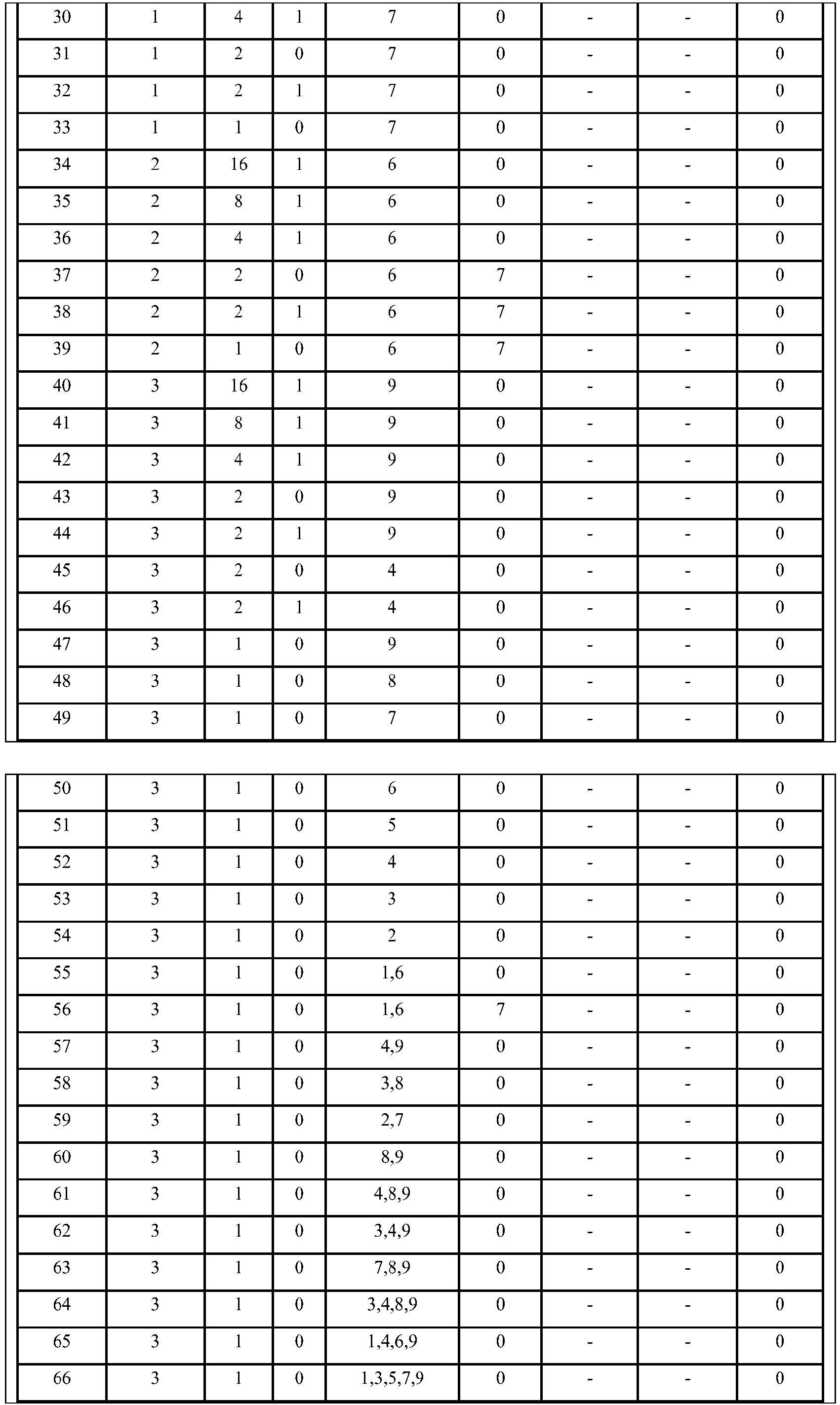

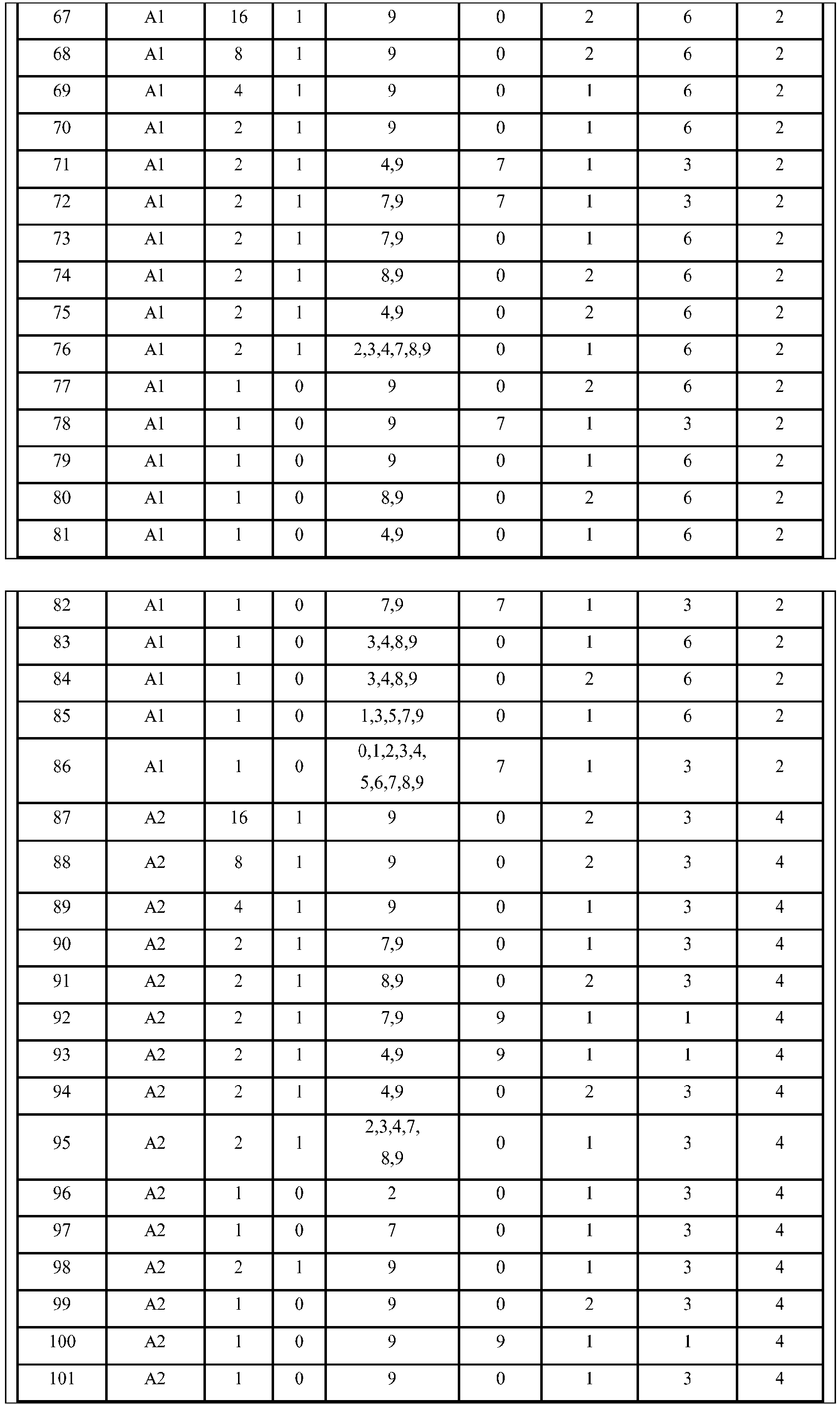

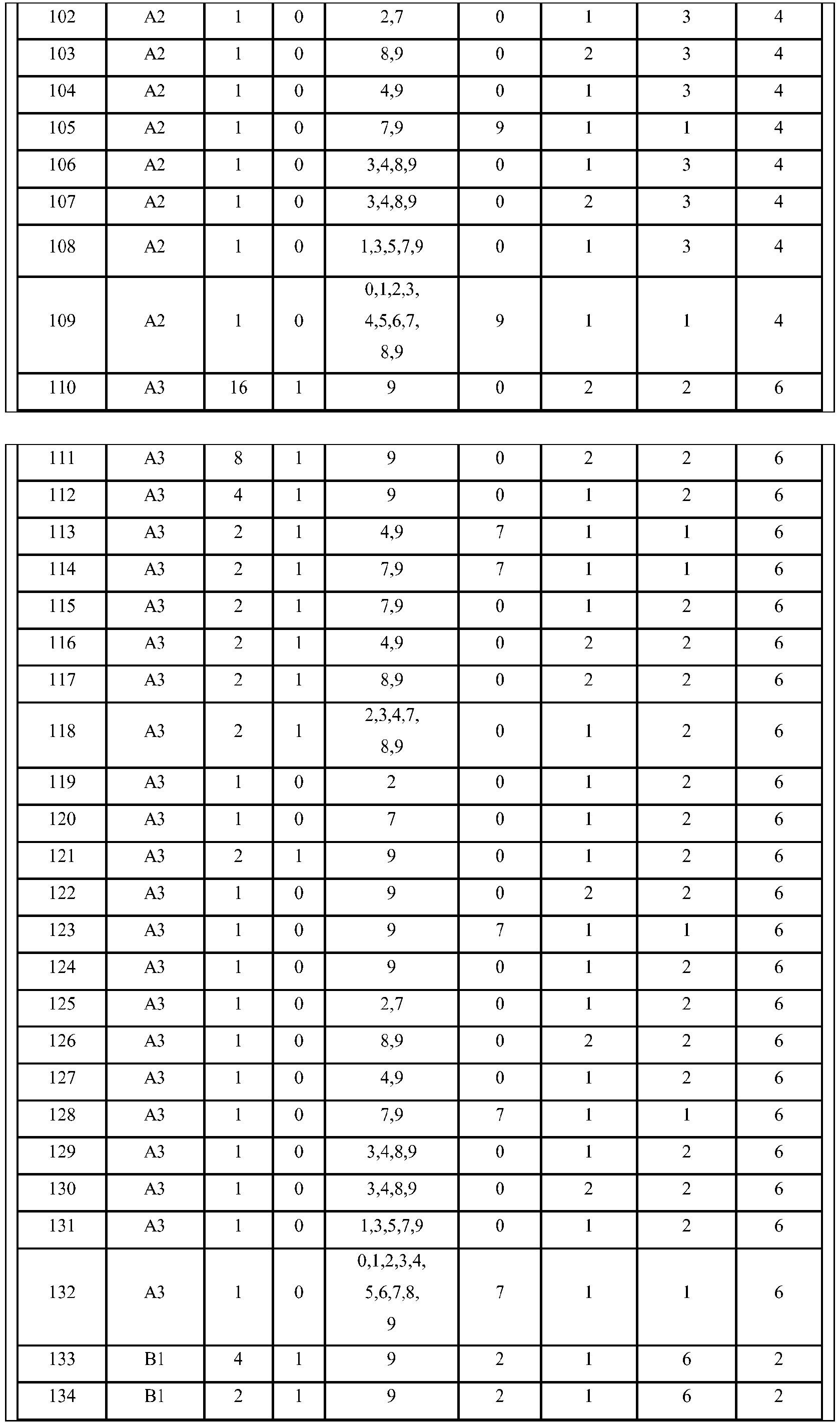

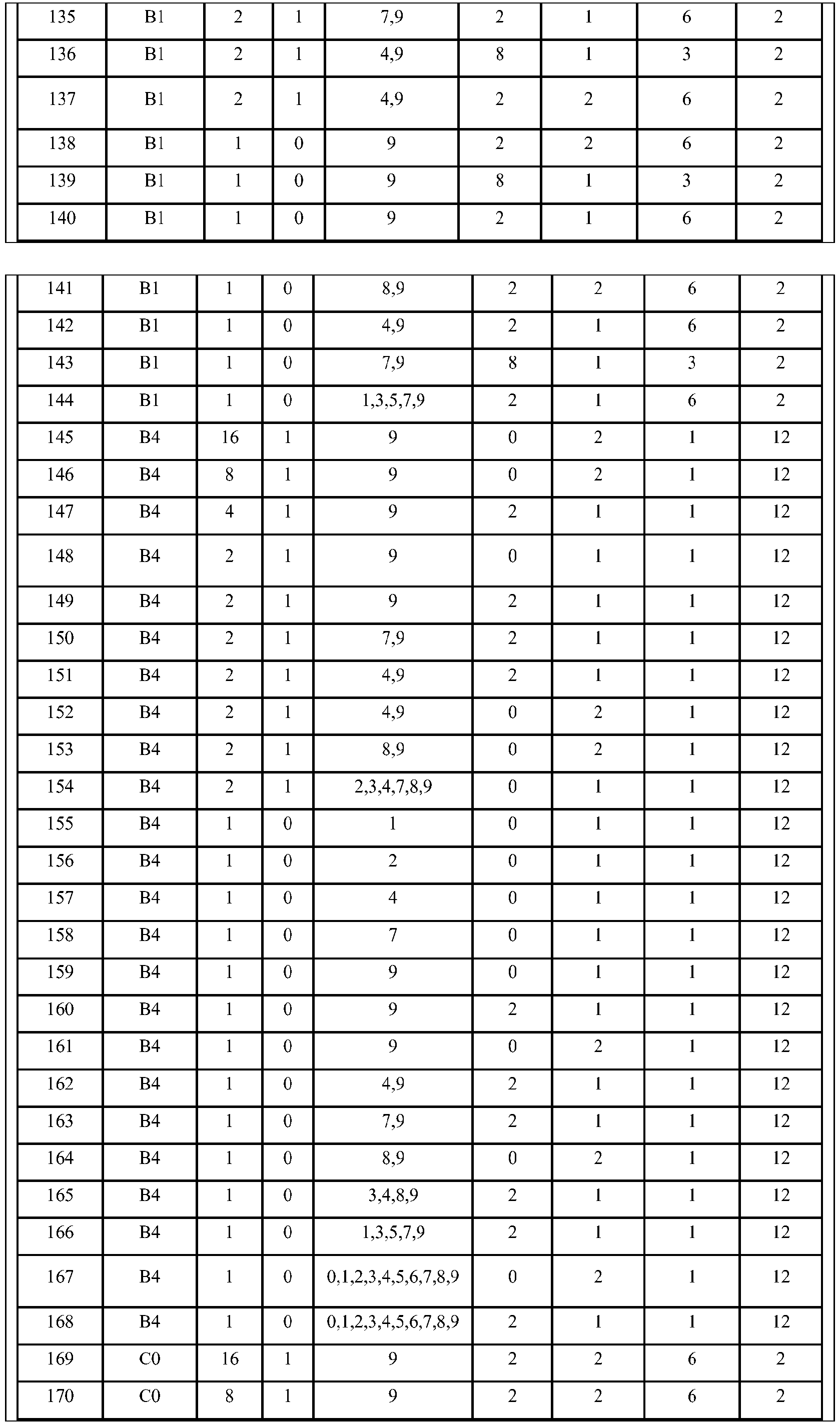

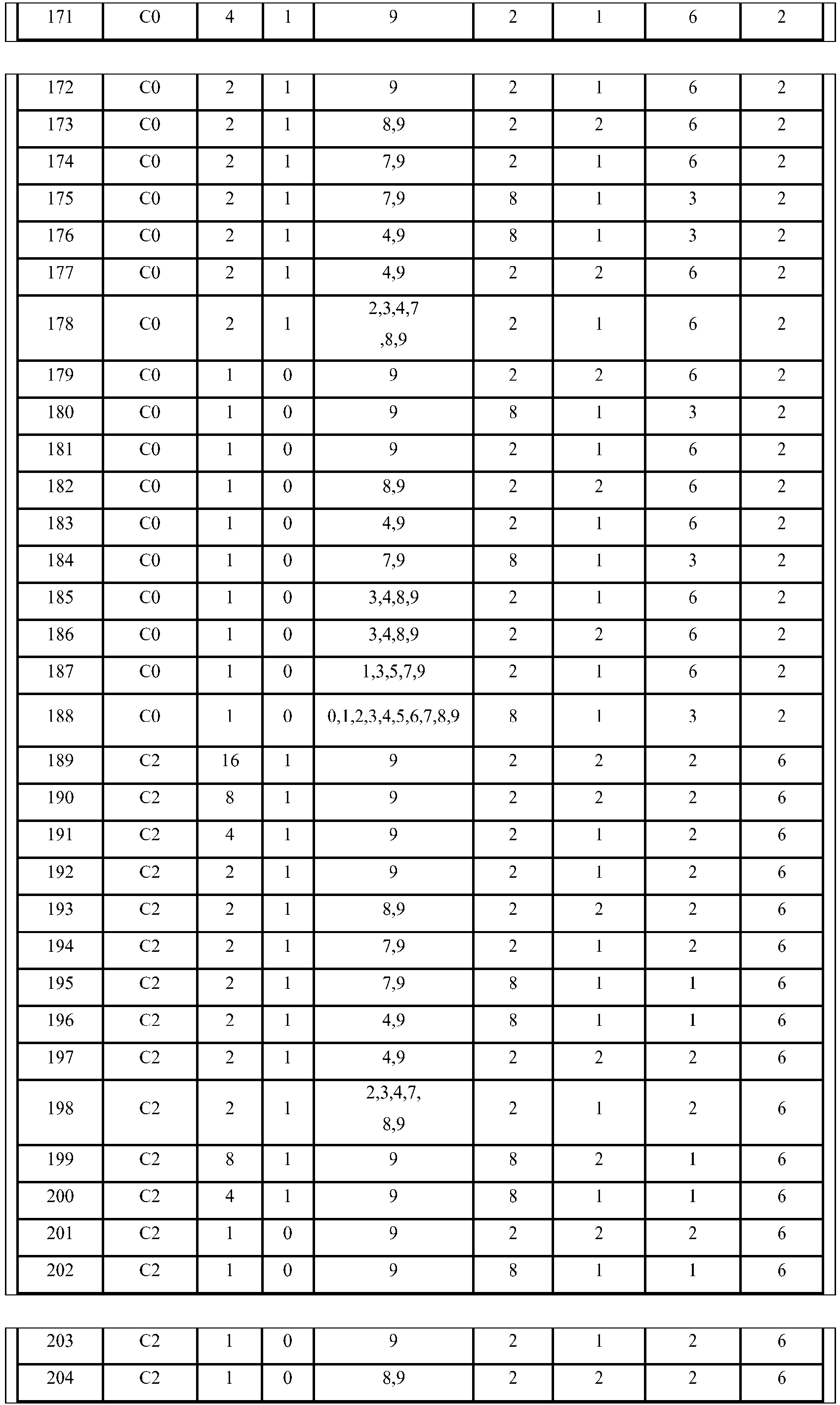

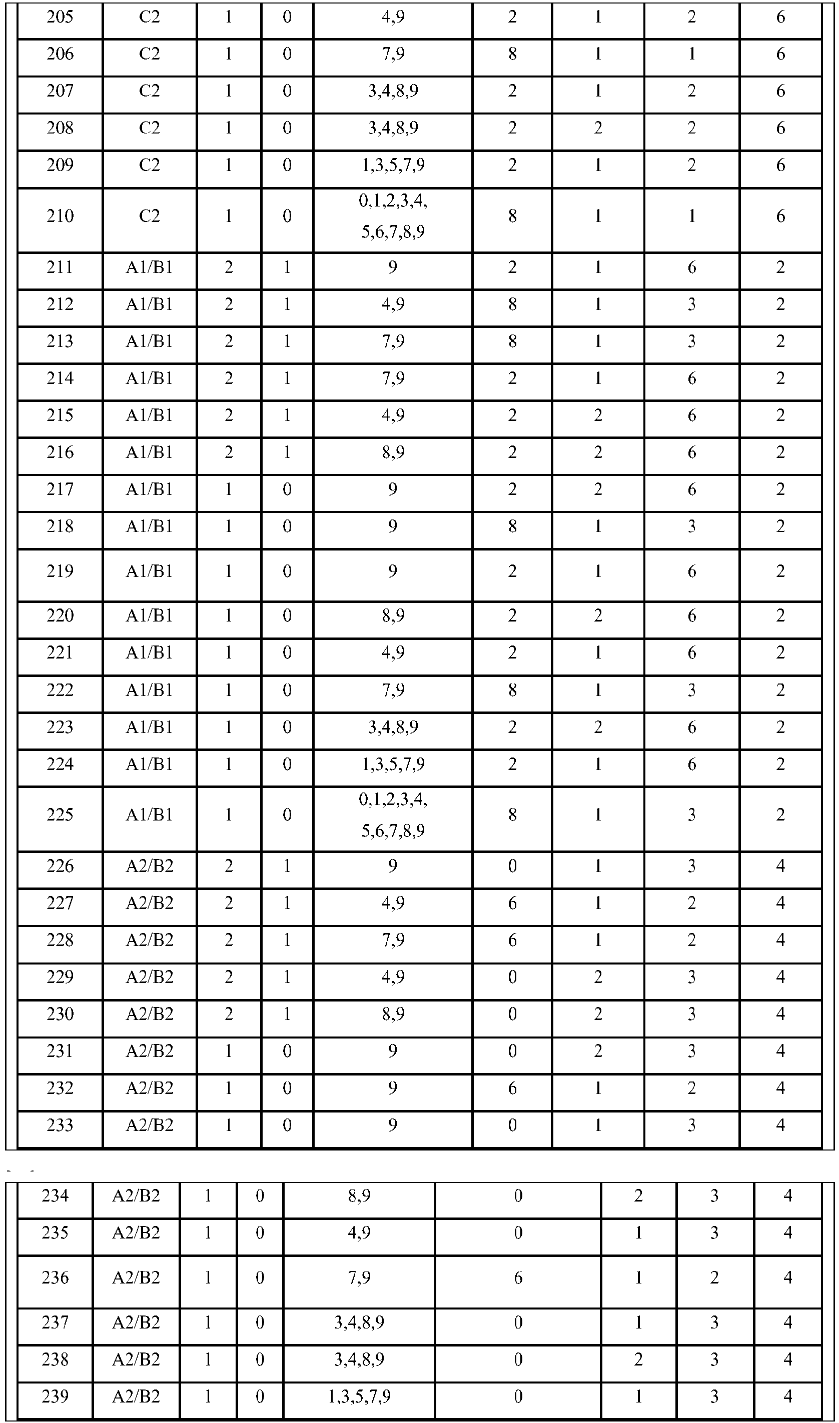

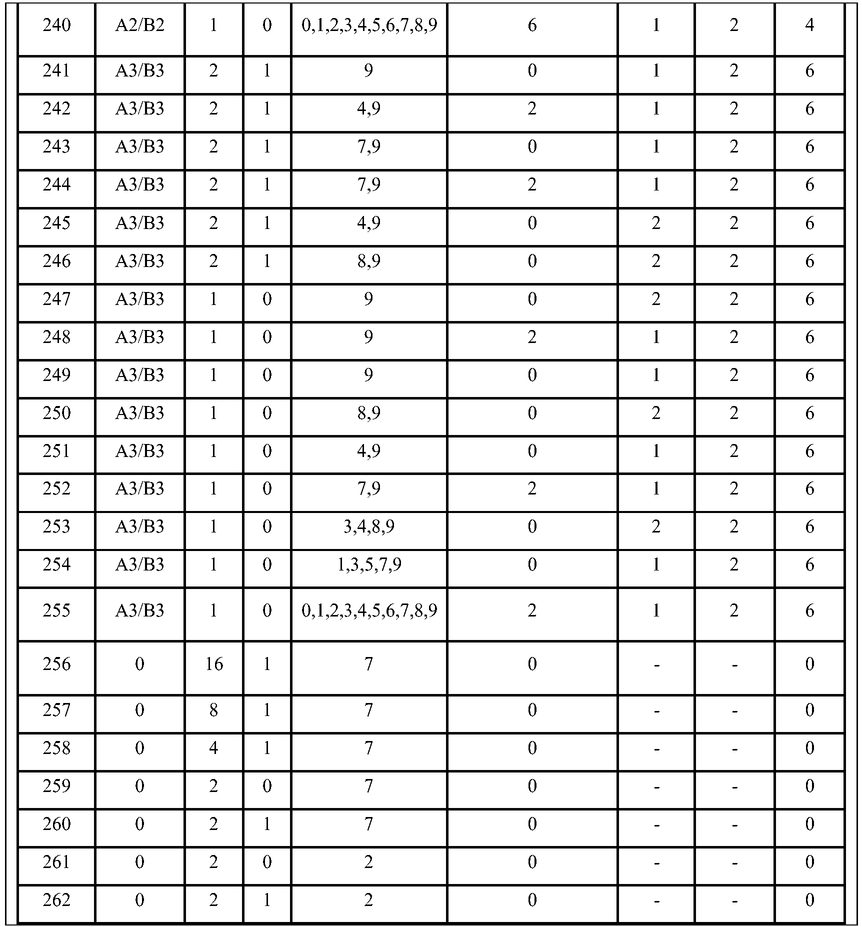

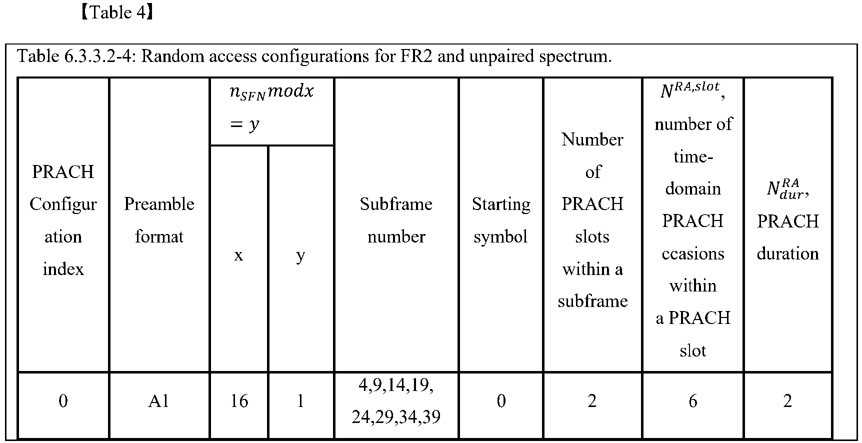

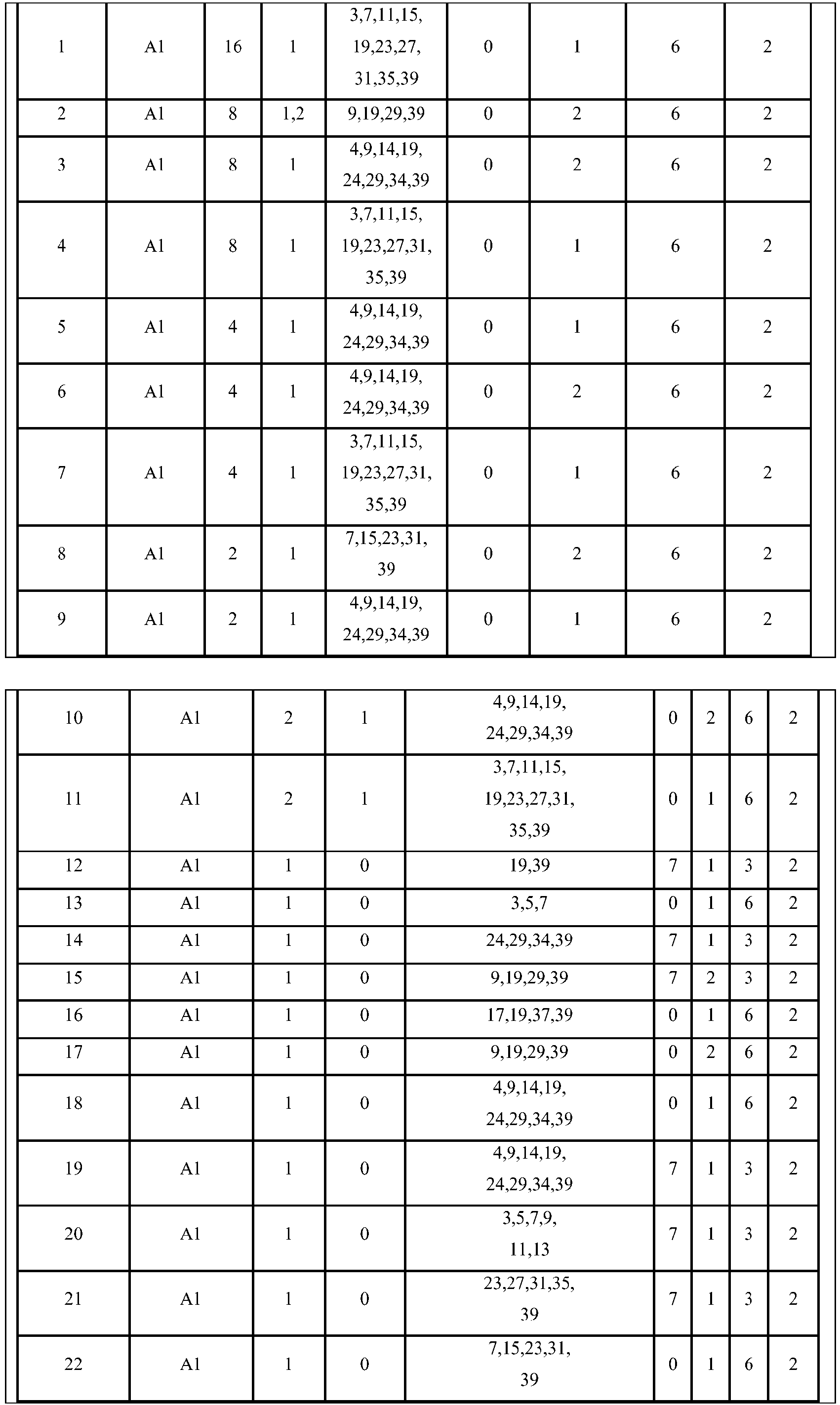

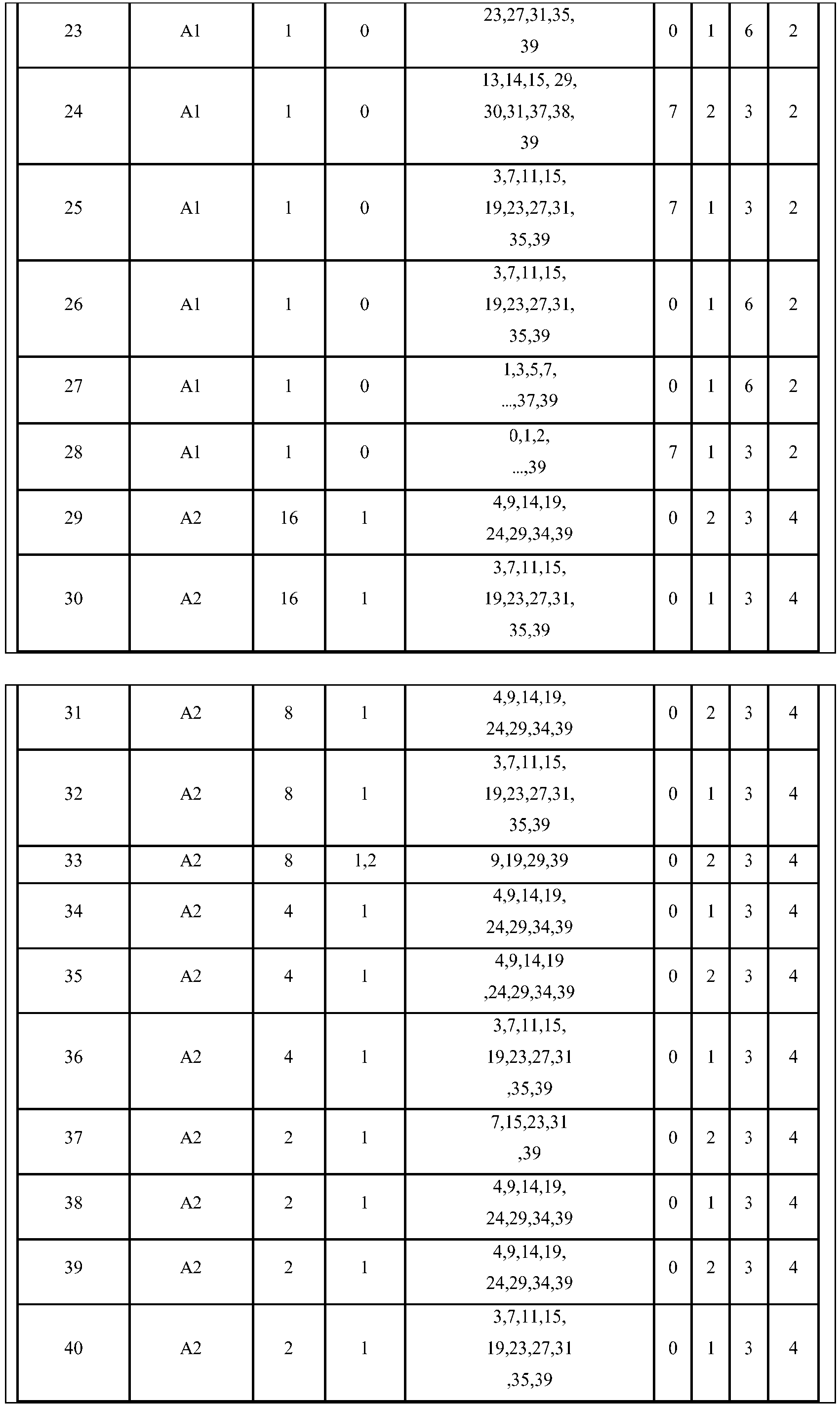

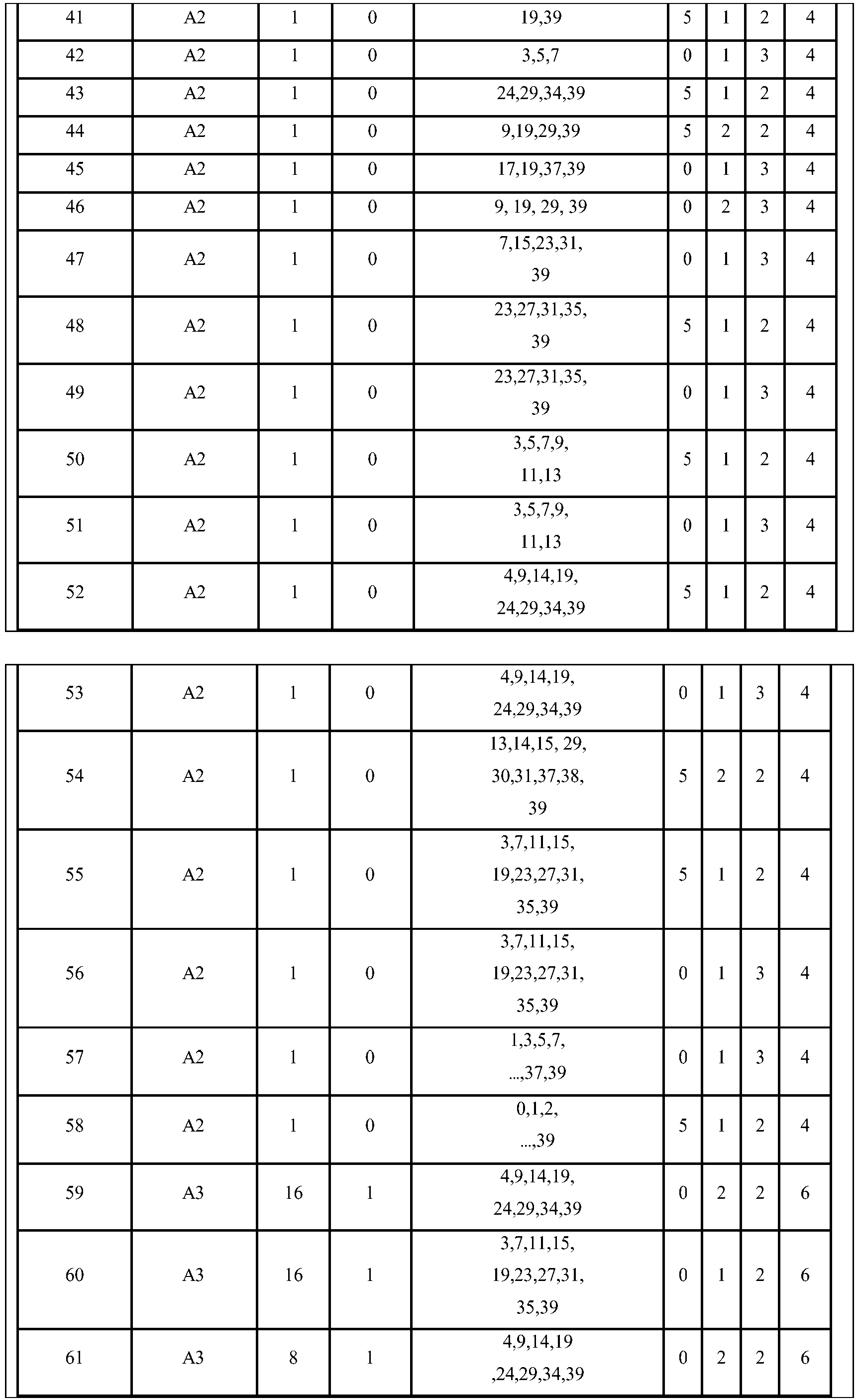

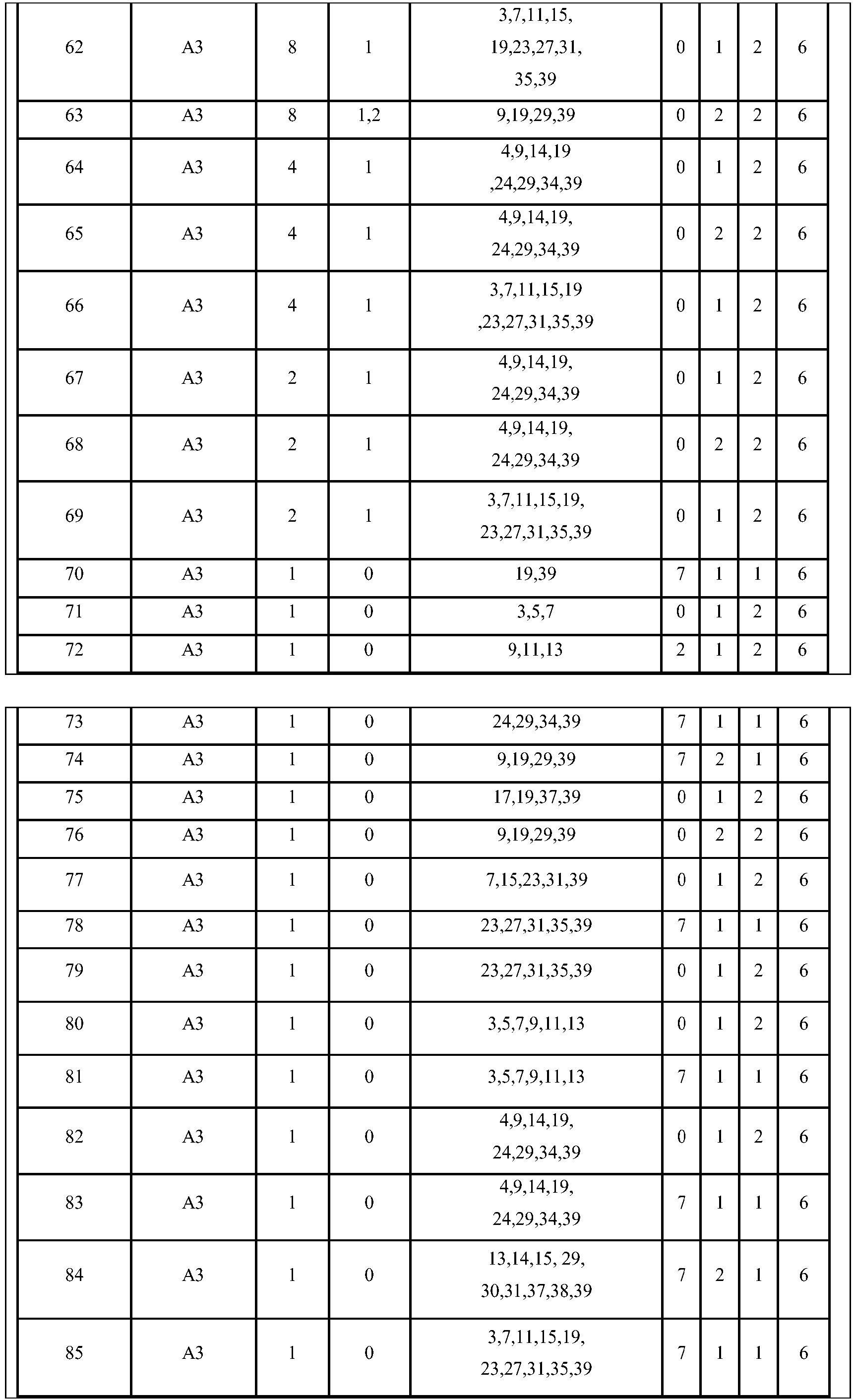

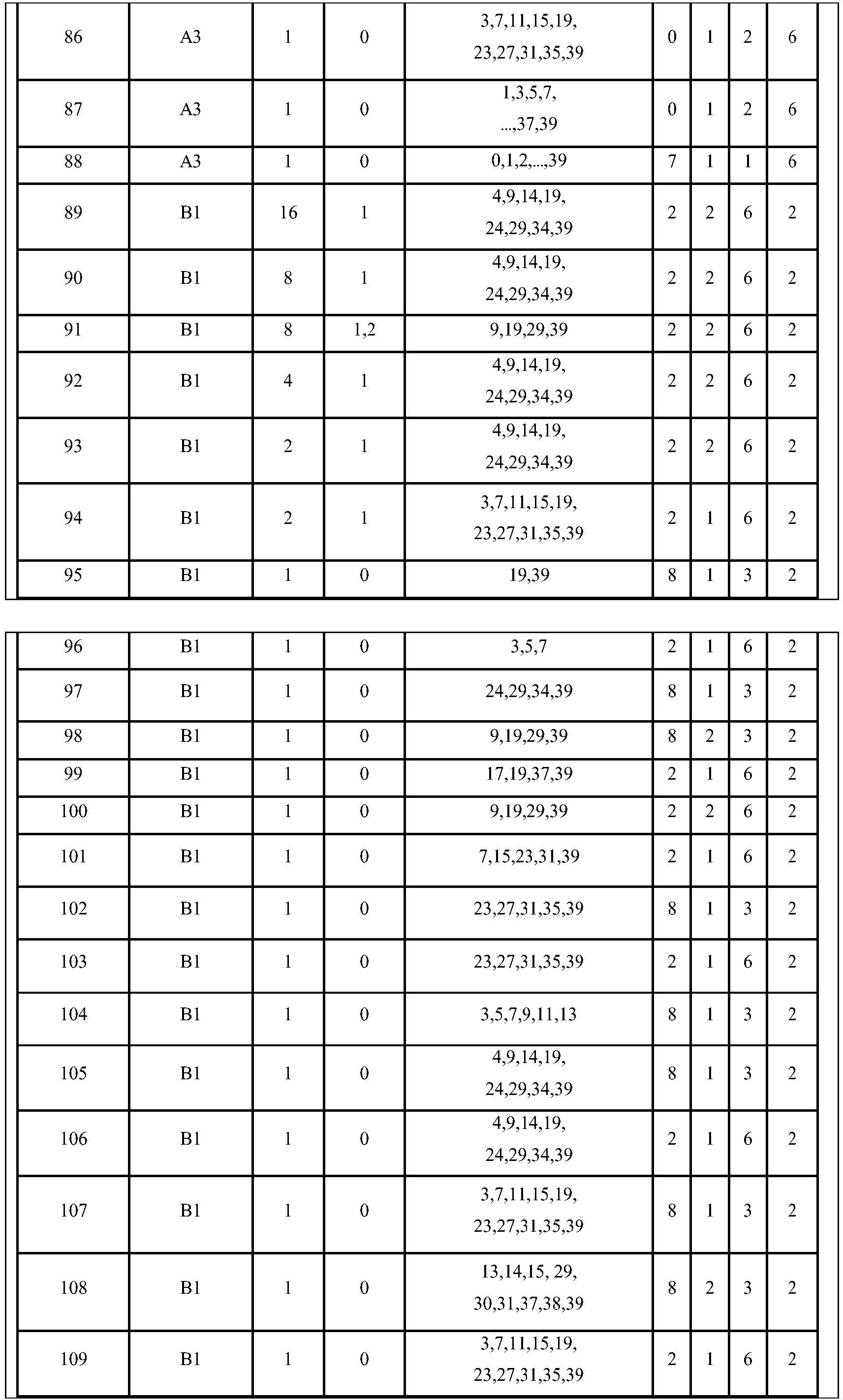

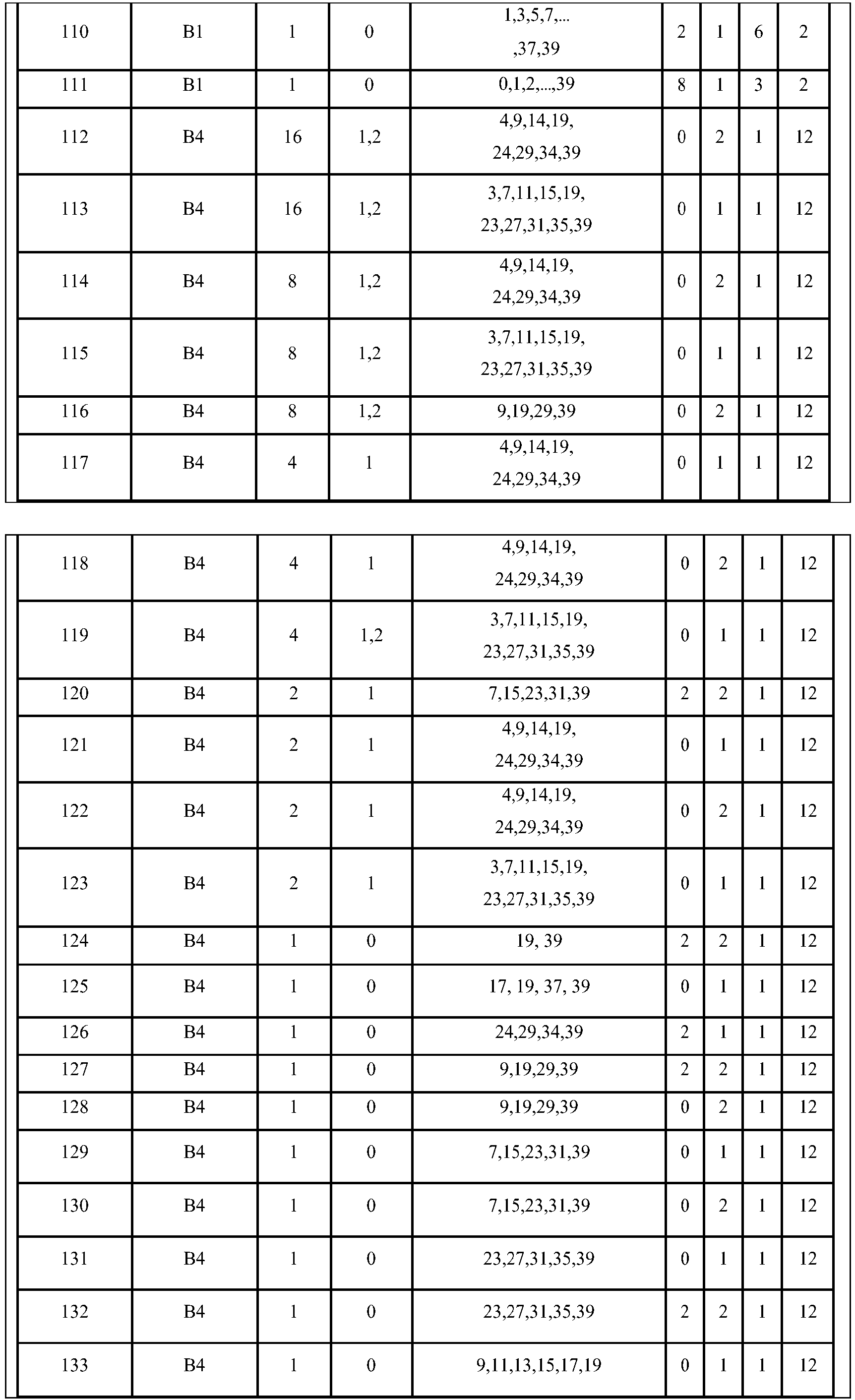

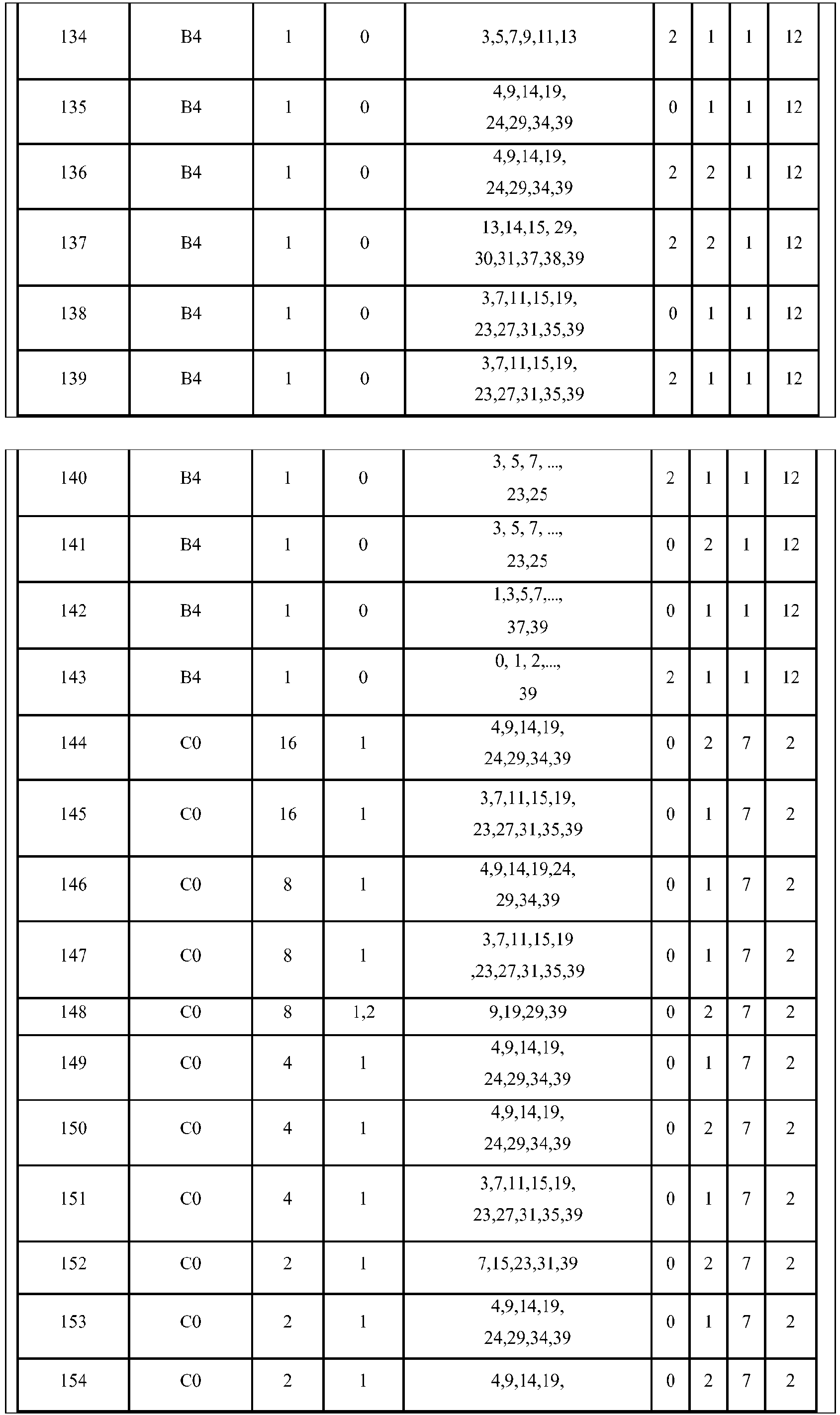

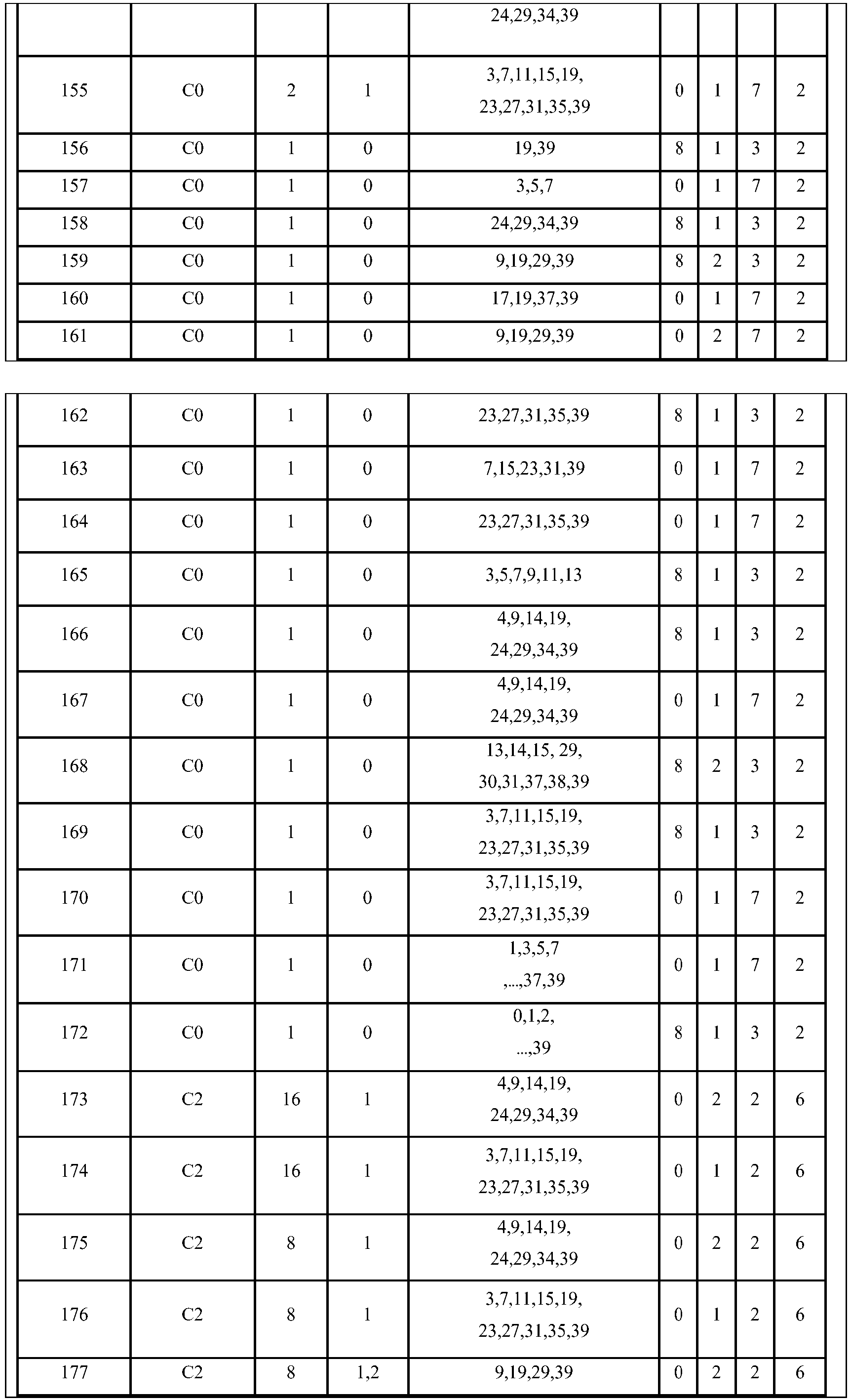

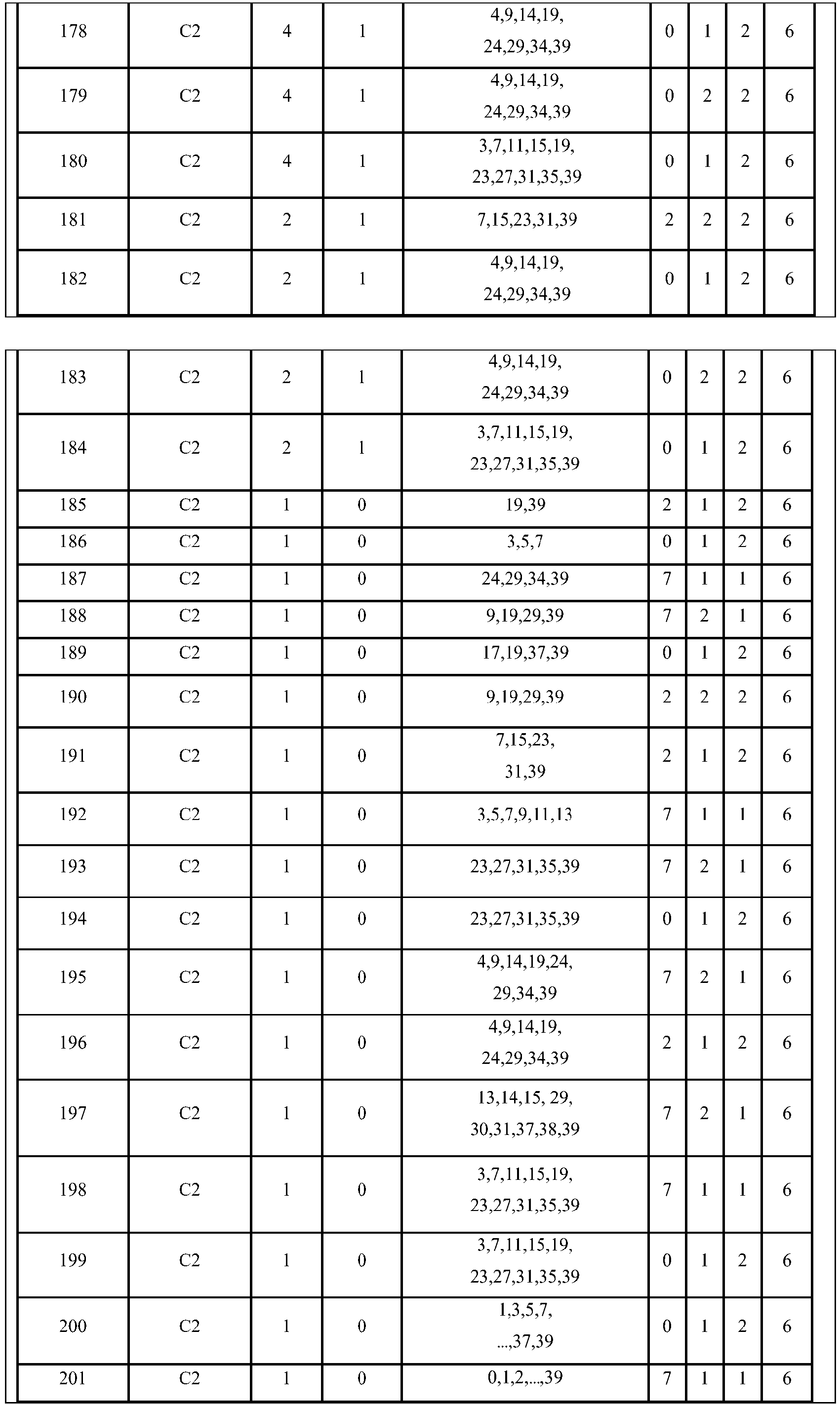

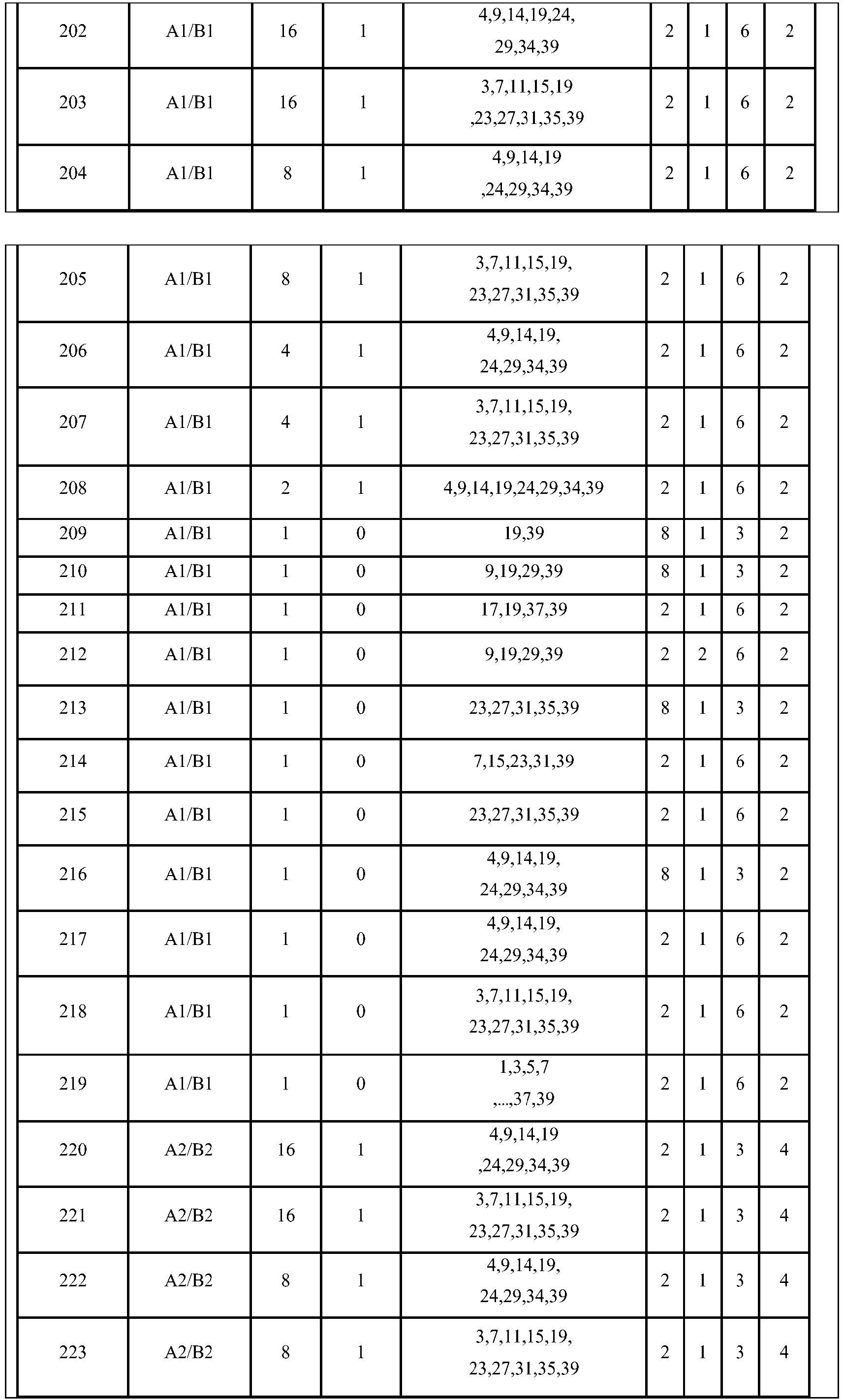

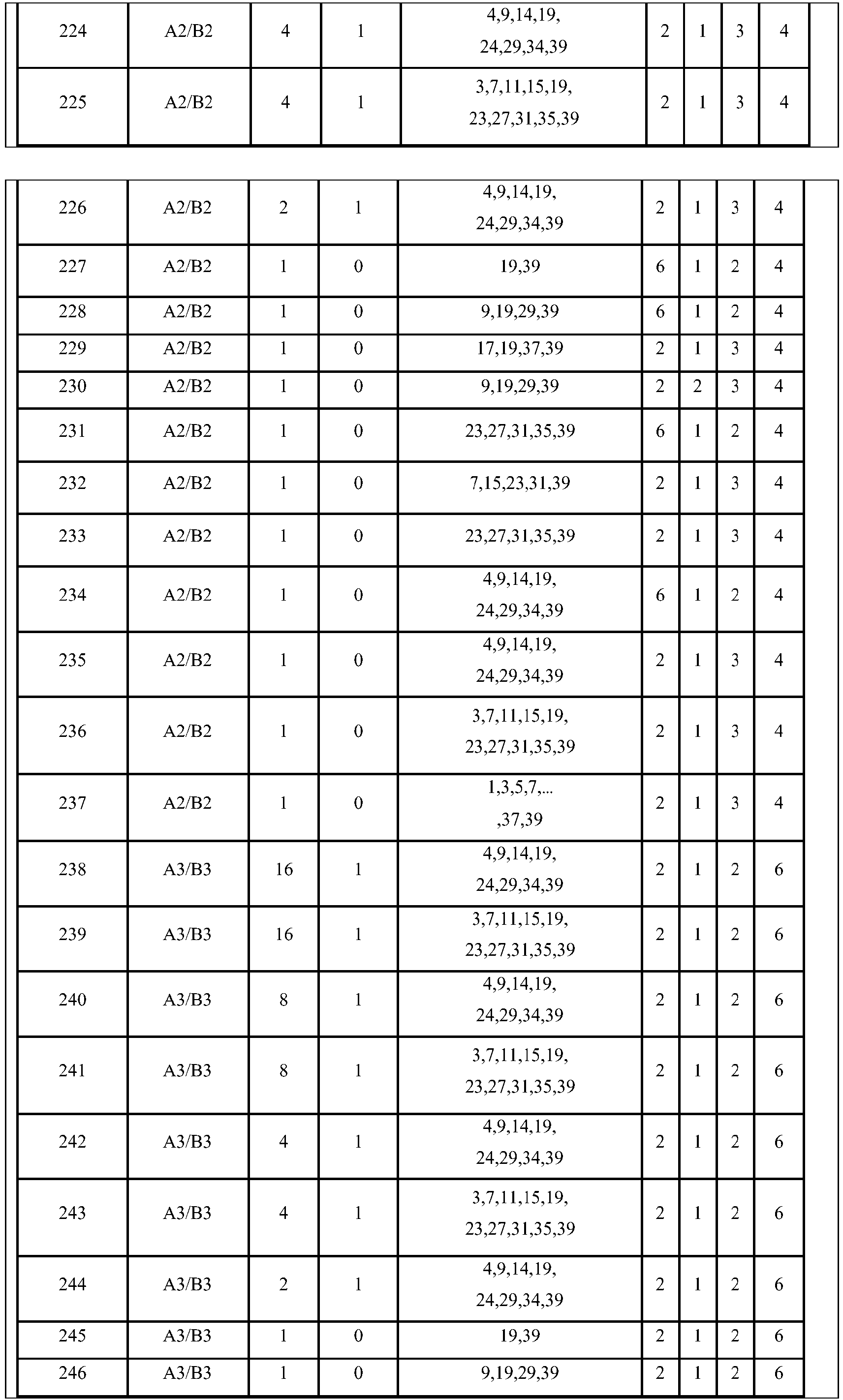

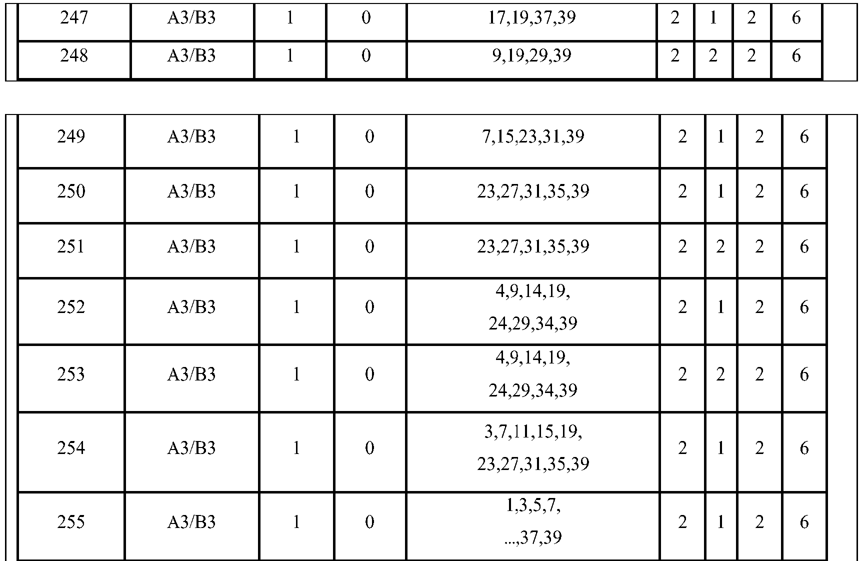

For example, in embodiments described below, the ROs may be ROs based on one of Tables 2 to 4 above.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

**[Table 5]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, when a PRACH repetition scheme is introduced for coverage enhancement in NR, a RACH resource partitioning method for PRACH repetition and a related UE/base station operation are proposed. In the present disclosure, 'PRACH transmission', 'RACH transmission' or 'preamble transmission' may be interpreted/replaced as 'MSG1 transmission' .

Various RAN1 work items are defined to distinguish UE/base station operations based on a RACH resource (e.g., PRACH preamble index, etc.). As an example, UEs related to redcap, small data transmission, Msg. 3 PUSCH repetition, etc., are defined to select a specific preamble index to request from the base station whether to use a corresponding feature in a PRACH preamble transmission step. However, when each operation separately created for each work item are defined, an implementation complexity of the UE/base station may be increased.

Therefore, a concept of "Feature Combination" has been introduced to efficiently support UE/base station operations that need to be distinguished by using the RACH resource (e.g., PRACH preamble index, etc.) in a RAN2 Rel-17 RACH partitioning work item. That is, the base station configures/indicates to the UE that a specific feature or a combination o f specific features is supported by configuring a specific PRACH resource (e.g., preamble start index and total number indication). The UE that intends to use/request a specific feature and/or a combination of specific features may select one of preamble indices of a region allocated to the specific feature and/ or the combination of the specific features desired by itself during the RACH procedure to transmit a PRACH preamble. RRC parameters for this operation may be "FeatureCombinationPreambles" and "FeatureCombination". Table 6 below shows the "FeatureCombinationPreambles" and "FeatureCombination" .

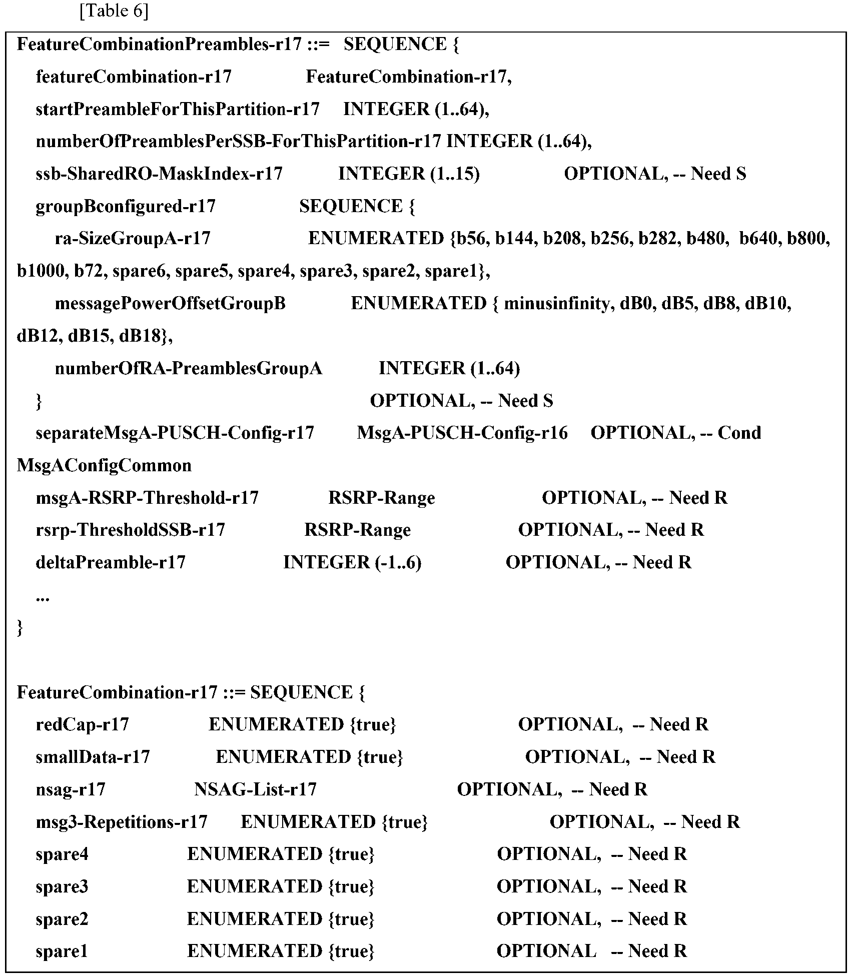

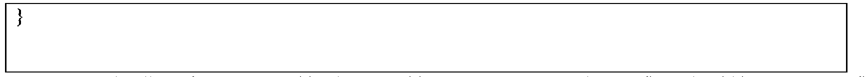

A plurality of FeatureCombinationPreambles parameters may be configured within RACH-ConfigCommon. Preamble index intervals corresponding to each region (i.e., a region/partition based on a preamble(s) belonging to each of the plurality of FeatureCompanyPreamble parameters) need to be configured not to overlap. In addition, features and/or combinations of features configured in respective regions also need to be configured to not overlap with each other. As described above, the parameter(s) for the random access procedure may be initialized/determined based on the RACH resource(s) (e.g., preamble(s)) selected by the UE.

In the present disclosure, a 'RACH resource' (or 'PRACH resource' ) may be interpreted/replaced as a random access resource. For example, a FeatureCombination (e.g., a feature or a combination of features) related to RACH resources may be interpreted/replaced as FeatureCombination related to a set of random access resources.

In addition to the RACH-ConfigCommon allocated to existing BWP-UplinkCommon, the base station may additionally allocate a RACH configuration through AdditionalRACH-Config-r17. The BWP-UplinkCommon may be configured based on an SIB (e.g., SIB1). The RACH procedure may be performed as follows by a Rel-16 UE/Rel-17 UE.

For Rel-16 UEs that may not read AdditionalRACH-Config-r17, the UEs perform the RACH procedure based on RACH-ConfigCommon allocated to BWP-UplinkCommon.

For UEs of Rel-17 and later that may read AdditionalRACH-Config-r17, the UEs perform the RACH procedure by confirming RACH-ConfigCommon allocated to the existing BWP-UplinkCommon and RACH-ConfigCommon allocated to the AdditionalRACH-Config-r17.

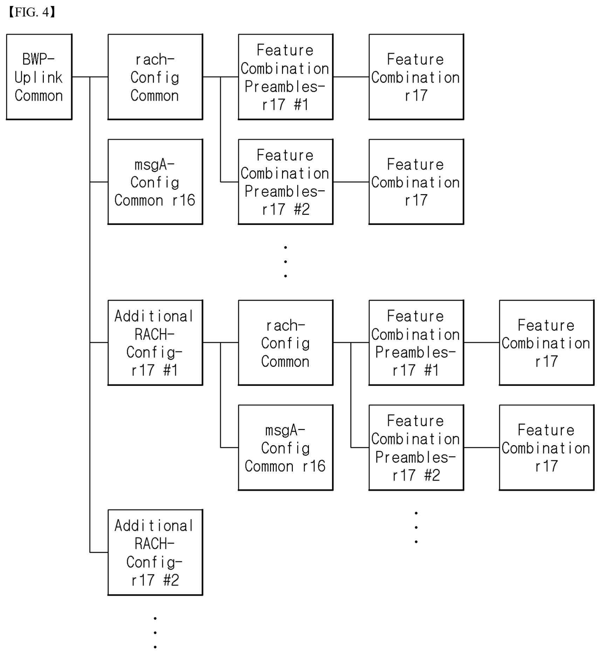

In addition, one or more FeatureCombinationPreambles described above may be configured in the RACH-ConfigCommon allocated to the existing BWP-UplinkCommon. One or more FeatureCombinationPreambles described above may be also configured in the RACH-ConfigCommon allocated to the AdditionalRACH-Config-r17. Hereinafter, this will be described with reference to FIG. 4.

FIG. 4 illustrates an RACH partitioning related RRC parameter. Specifically, FIG. 4 illustrates a connection relationship/up-and-down relationship of the RACH partitioning related RRC parameters.

Respective parameters will be specifically described with reference to FIG. 4. For convenience of description, an RRC parameter (e.g., BWP-UplinkCommon parameter) is described as a parameter name (e.g., BWP-UplinkCommon).

The BWP-UplinkCommon includes i) rach-ConfigCommon, ii) msgA-ConfigCommon, and iii) one or more AdditionalRACH-Config #1, #2, ....

Each AdditionalRACH-Config includes i) rach-ConfigCommon and ii) msgA-ConfigCommo.

Each rach-ConfigCommon includes one or more FeatureConbinationPreambles.

Each FeatureConbinationPreambles includes FeatureCombination.

Table 7 shows the RRC parameters described above.

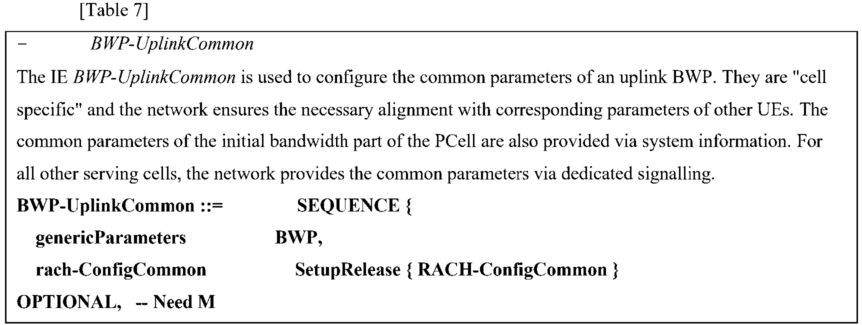

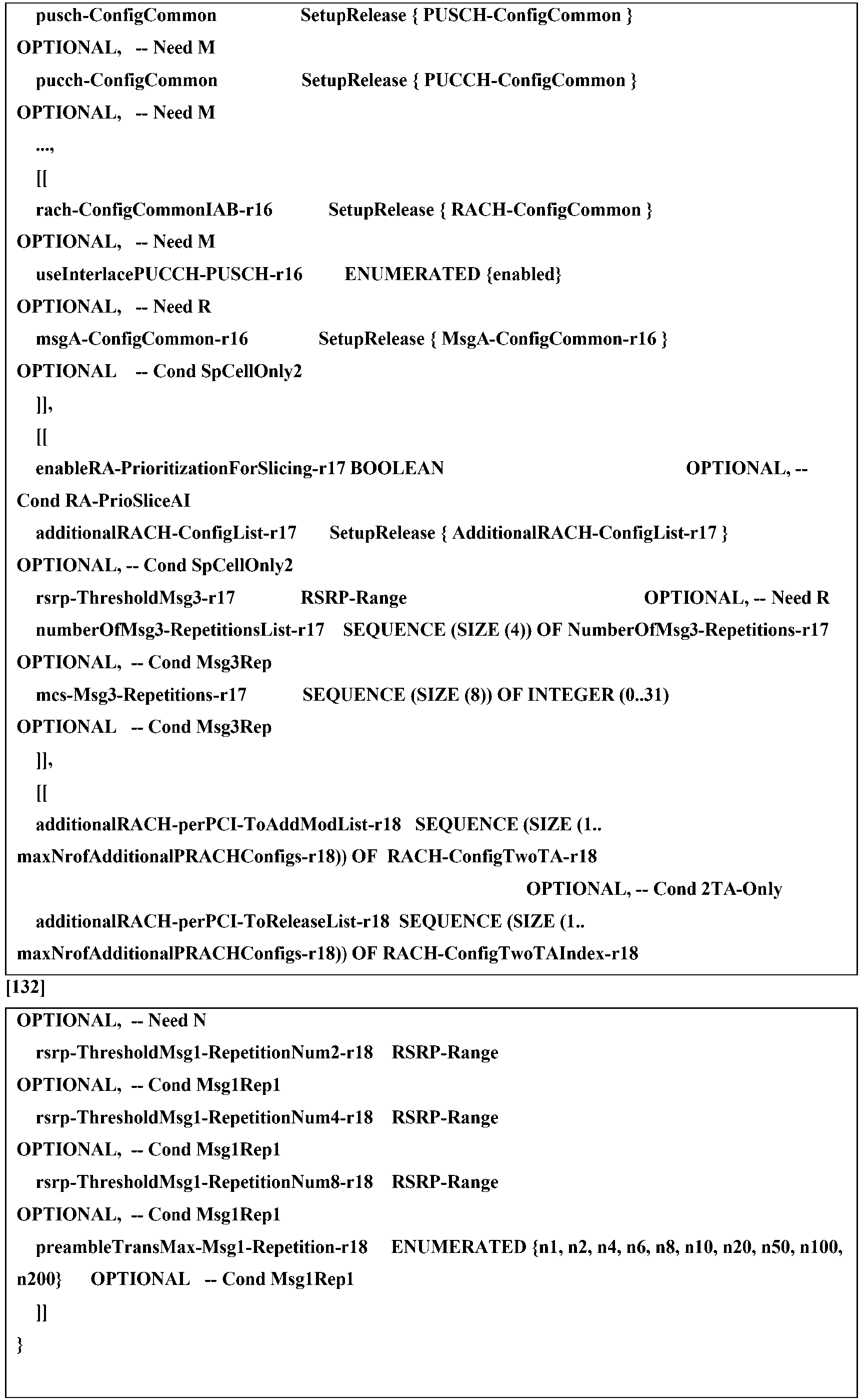

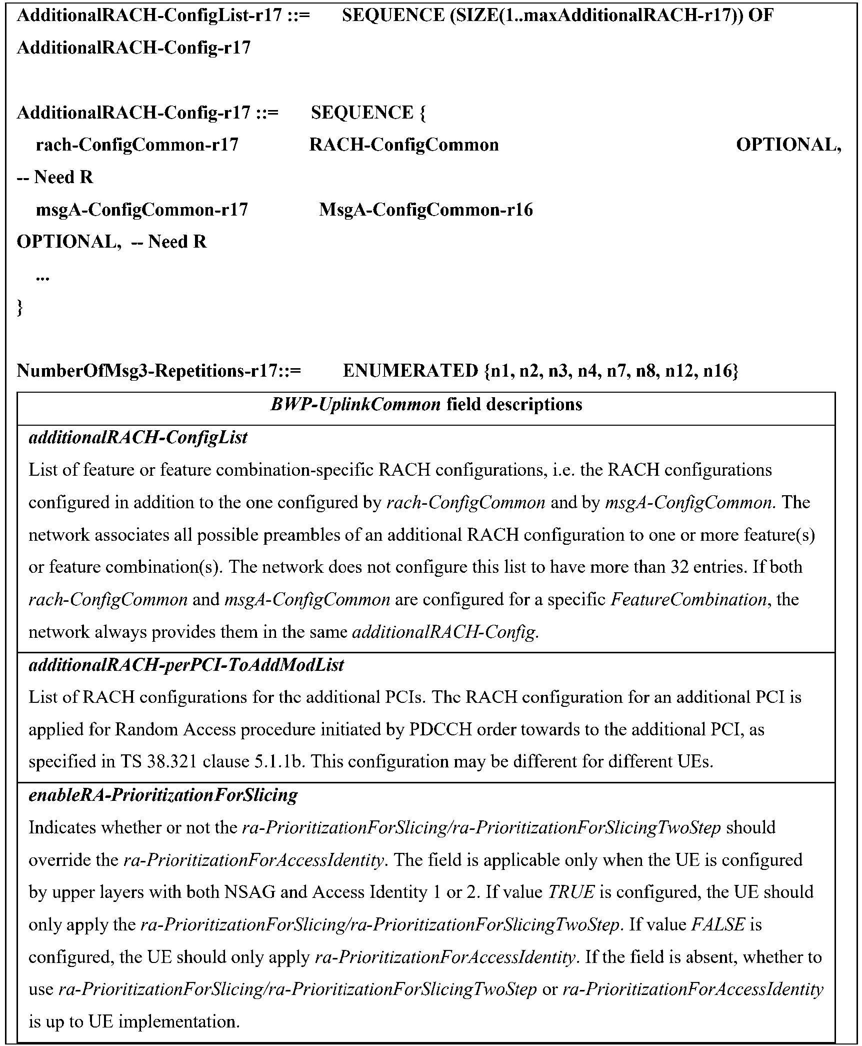

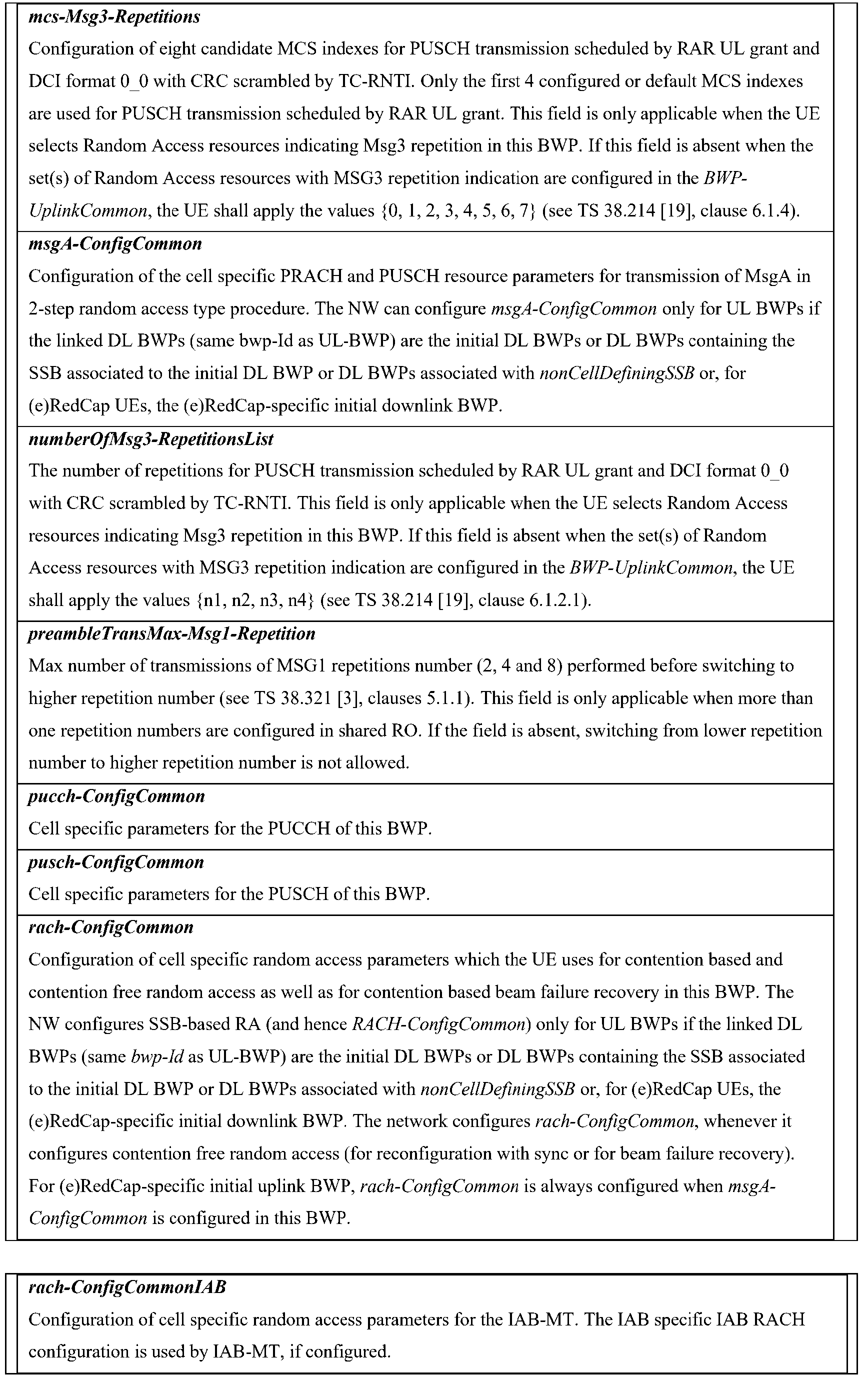

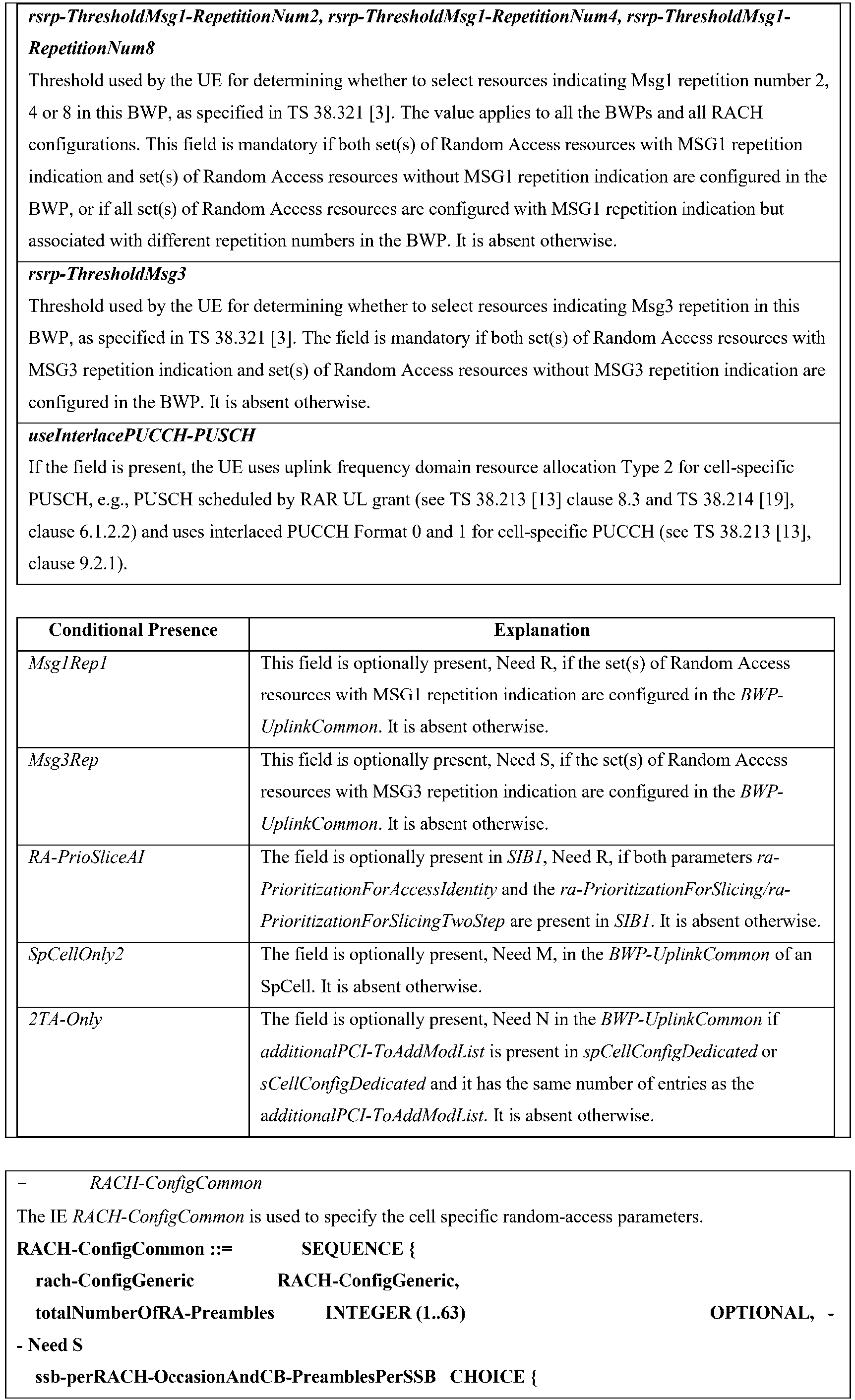

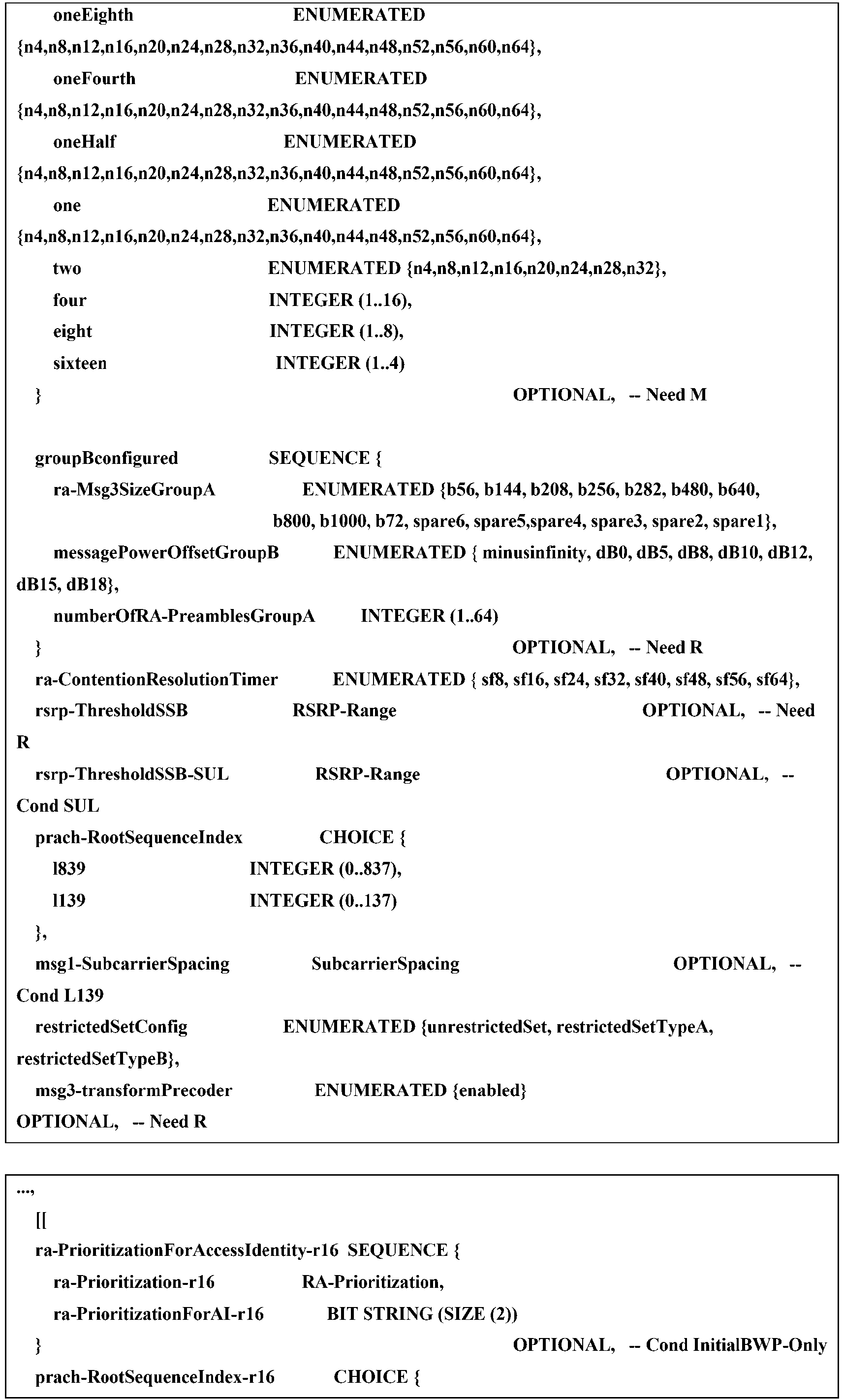

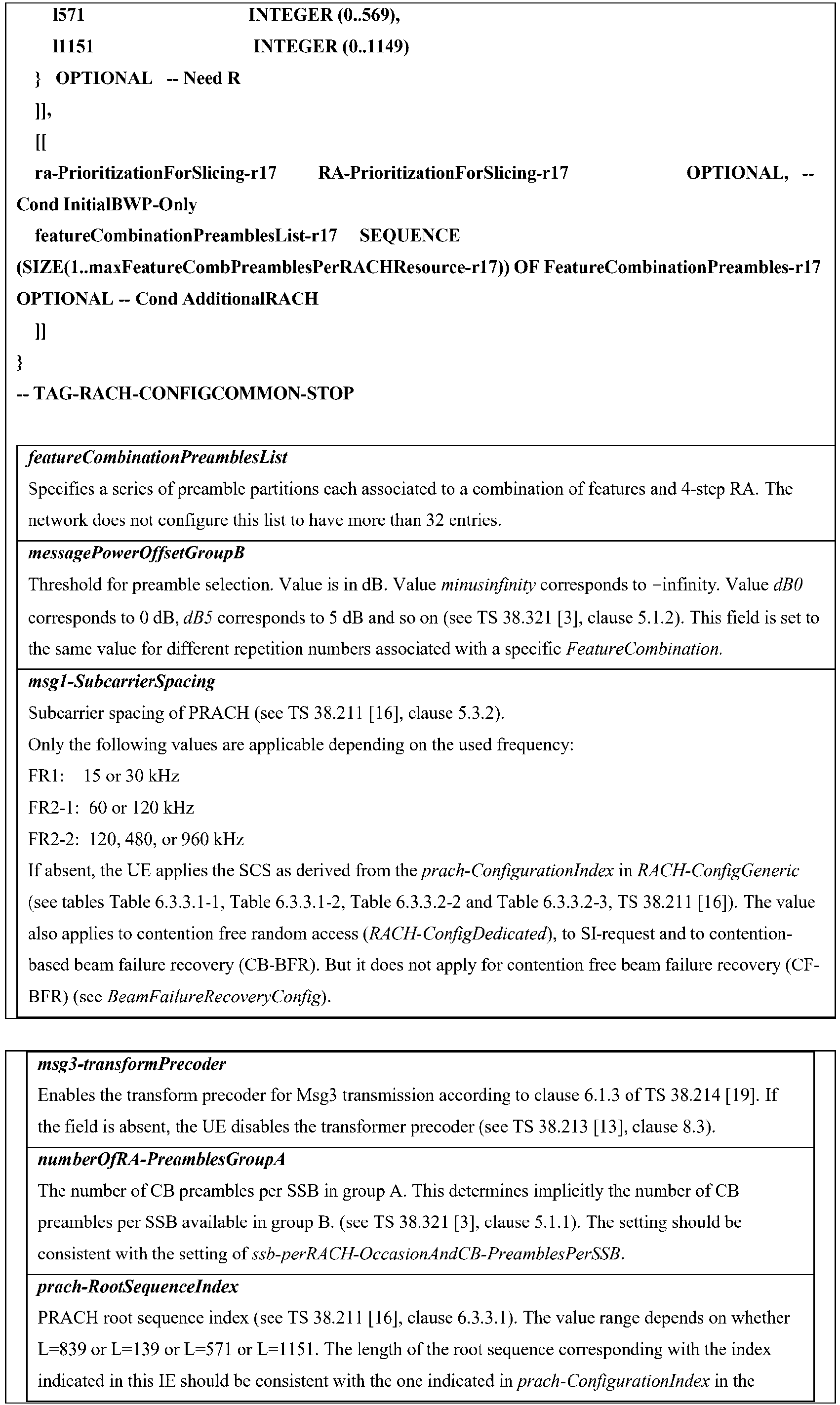

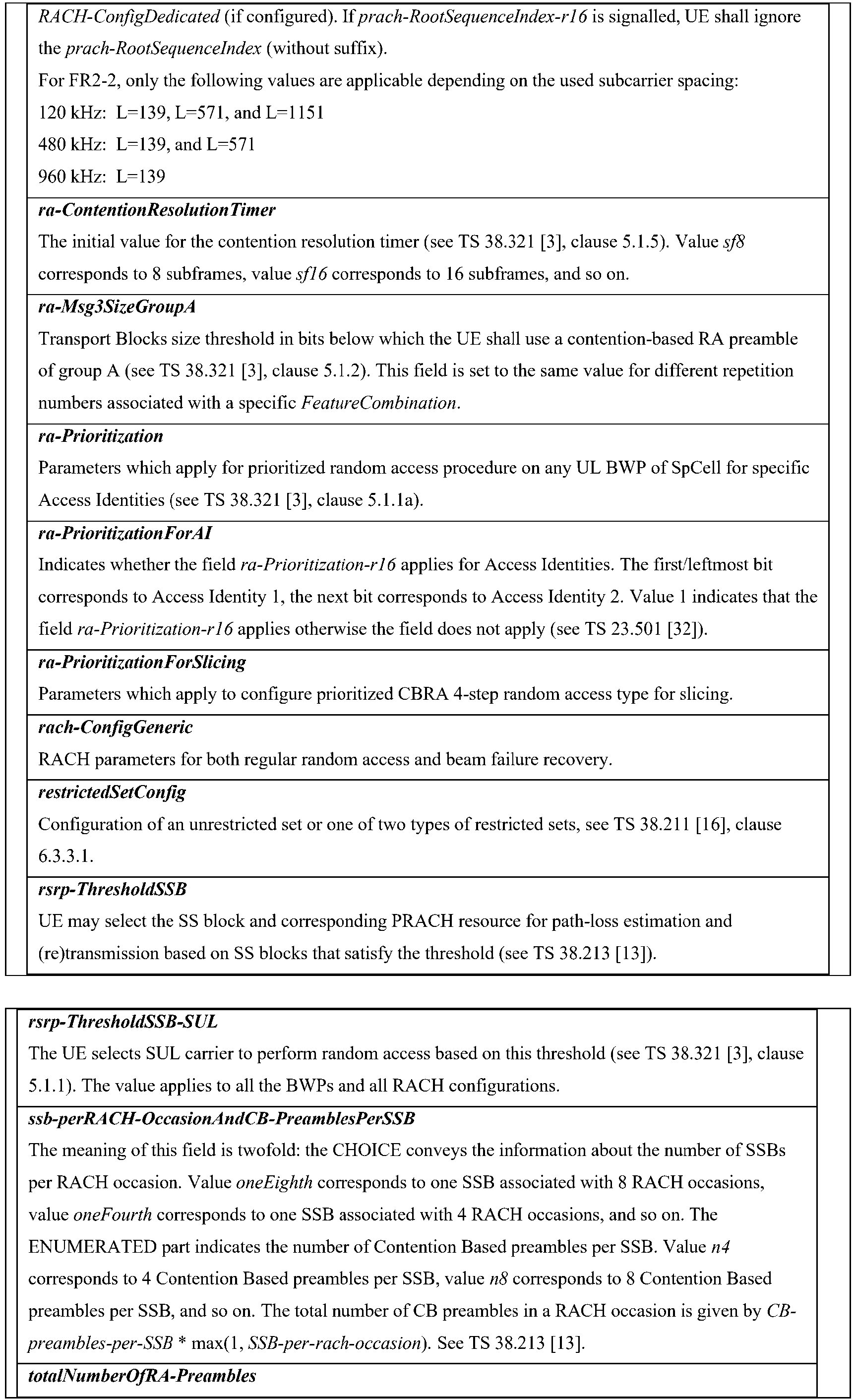

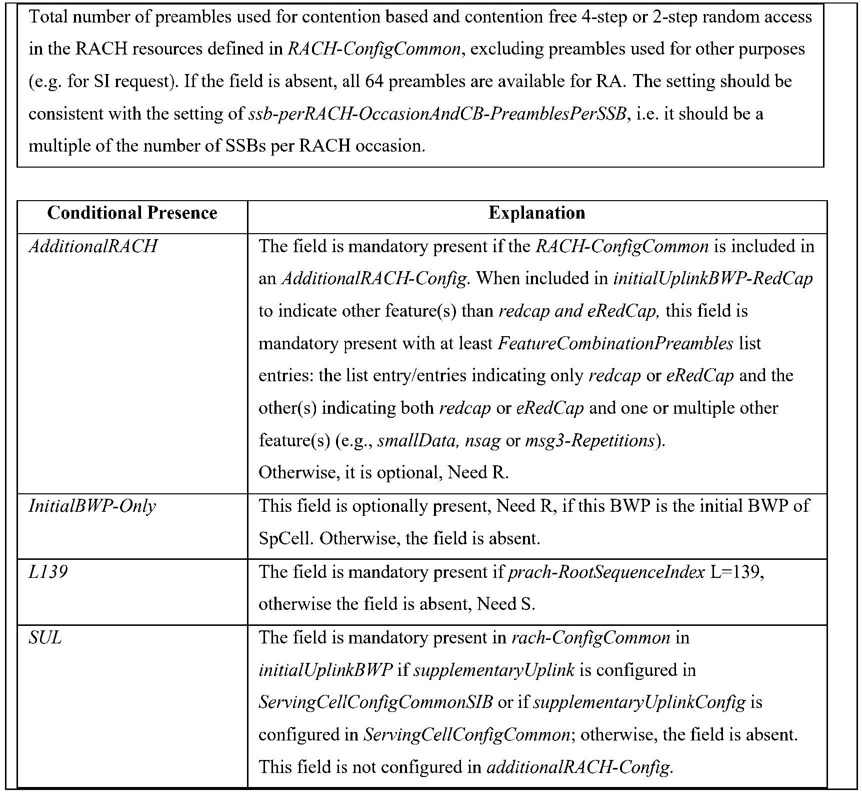

The introduction of PRACH preamble repetition transmissions is being considered to enhance UL coverage in the existing NR system. Therefore, to support PRACH repetition, it is necessary to define how to allocate PRACH resources different repetition transmission numbers. Accordingly, the present disclosure proposes a RACH resource partitioning method and related UE/base station operations when PRACH repetition is introduced in the NR system.

A method of allocating RACH resources for multiple PRACH repetitions is described below.

Multiple methods of allocating PRACH repetition resources different repetition numbers are being considered. In this instance, a method may be considered to allocate RACH resources so that multiple PRACH repetition resources different repetition numbers are distinguished based on a preamble level or an RO level, and related methods are proposed as follows.

### [Method 1]

A method of allocating multiple PRACH repetition resources with different repetition numbers in a separated RO scheme based on additional RACH configuration is described below.
A. A base station may configure/indicate a repetition number as follows. The repetition number may be configured/indicated based on RACH-commonconfig or FeatureCombinationPreambles. For example, a parameter (e.g., RACH-commonconfig) in each additional RACH configuration (e.g., AdditionalRACH-Config-r17) may include the repetition number. For example, RACH partitioning (e.g., FeatureCombinationPreambles) in RACH-commonconfig may include the repetition number.
   i. As a specific example, the configured/indicated repetition number may be one of {1, 2, 4, 8}. A UE may perform single or multiple RACH transmission based on the repetition number configured/indicated by the base station.
   ii. For another example, the configured/indicated repetition number may be one of {2, 4, 8}. If the base station does not configure/indicate the repetition number, the repetition number may be implicitly indicated as 1. For example, the UE may perform the multiple RACH transmissions based on the repetition number configured/indicated by the base station. If the repetition number is not indicated by the base station (e.g., there is no value indicated by the repetition number or there is no repetition number parameter), the UE may perform the single RACH transmission.

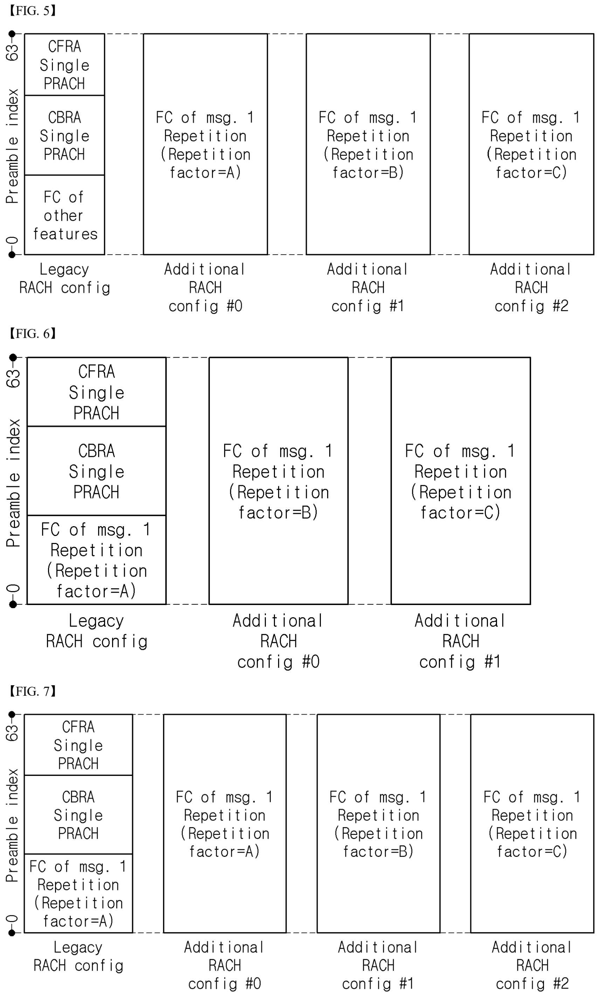

Configuration of the repetition number is described below in detail with reference to FIGS. 5 to 9.

FIGS. 5 to 9 illustrate configuration of a repetition number based on additional RACH configuration.

### Alt 1-1)

Each of additional RACH configurations that configure/indicate multiple RACH transmissions may be defined to always indicate a different repetition number.
i. It may be assumed that a base station allocates a single RACH resource and multiple RACH resources based on a separated RO scheme. That is, if the legacy RACH configuration does not indicate a repetition number, the repetition number (repetition factor) may be allocated as illustrated in FIG. 5. Referring to FIG. 5, a repetition number based on each AdditionalRACHconfig is A, B, or C. FC represents a feature combination. For example, the UE may perform a RACH procedure by selecting a RACH configuration that matches a repetition number determined based on RSRP. For example, the repetition number may be determined as 2, 4, or 8 based on the RSRP being lower than a RSRP threshold (for repetition number 2/4/8).
ii. It may be assumed that the base station allocates a single RACH resource and multiple RACH resources based on the separated RO scheme. That is, if the legacy RACH configuration also indicates a repetition number, the following embodiment may be applied.

### Alt 1-1-1)

As illustrated in FIG. 6, the repetition number indicated in the legacy RACH configuration may be defined to always be configured/indicated differently from the repetition number values indicated in the additional RACH configurations. Referring to FIG. 6, the repetition number based on the legacy RACH configuration is A, and the repetition number based on each AdditionalRACHconfig is B or C. For example, the UE may perform the RACH procedure by selecting a RACH configuration that matches a repetition number determined based on RSRP. For example, the repetition number may be determined as 2, 4, or 8 based on the RSRP being lower than the RSRP threshold (for repetition number 2/4/8).

### Alt 1-1-2)

As illustrated in FIG. 7, only the repetition number value indicated based on each additional RACH configuration may be defined to be differently configured/indicated, regardless of the repetition number value indicated in the legacy RACH configuration.
A. If there are two RACH resources with the same repetition number (e.g., if a legacy RACH configuration and a specific additional RACH configuration have the same repetition number), and if it is determined that the UE selects the corresponding repetition number through RSRP, etc., the following embodiment may be applied.

### Alt 1-1-2-A)

The UE may select a RACH resource based on a configured/indicated/defined probability value. For example, the probability value may be configured/indicated/defined as follows.
p = legacy RACH configuration selection probability
1-p = additional RACH configuration selection probability (0≤p≤1)

### Alt 1-1-2-B)

The UE may randomly select a RACH resource.

### Alt 1-2)

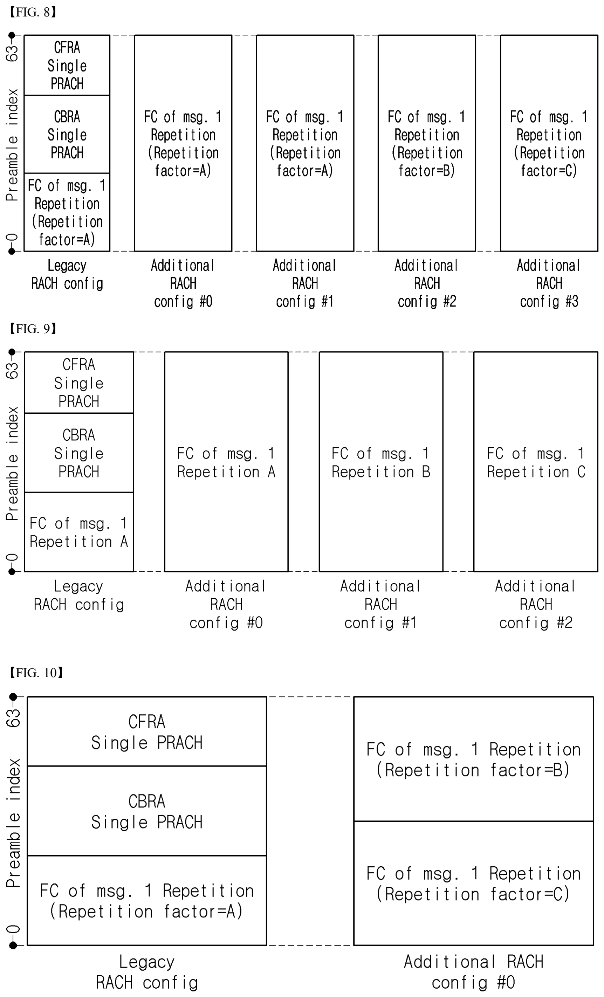

The same repetition number may be configured/indicated based on two or more additional RACH configurations and/or a legacy RACH configuration.
i. There may be two RACH resources with the same repetition number (e.g., if repetition numbers based on a legacy RACH configuration and/or multiple additional RACH configurations are the same). Specifically, referring to FIG. 8, a repetition number based on each of Legacy RACH config, Additional RACH config #0, and Additional RACH config #1 is A. If the UE is determined to select the repetition number through the RSRP, etc., the following embodiment may be applied.

### Alt 1-2-A)

The UE may select a RACH resource based on a configured/indicated/defined probability value. For example, the probability value may be configured/indicated/defined as follows.
p = legacy RACH configuration selection probability
(1-p)/N = selection probability of one of N additional RACH configurations (0≤p≤1)

### Alt 1-2-B)

The UE may randomly select a RACH resource.

A method of setting a parameter for feature combination is described in detail below.
i. Alt A) Parameters for feature combination may be set to a common value for Msg. 1 repetition, regardless of the repetition number. For example, a new parameter may be introduced (e.g., msg. 1 repetition R18). For example, existing parameters (e.g., msg. 3 repetition R17) may be reused to support up to PRACH repetition.
ii. Alt B) As illustrated in FIG. 9, parameters for feature combination may be set to a different parameter per repetition number. For example, the parameter for feature combination may be defined to include a repetition number value (e.g., msg. 1 Repetition A, msg. 1 Repetition B, msg. 1 Repetition C). According to the present embodiment, the base station does not need to separately indicate the repetition number value in the RACH configuration, but multiple parameters for feature combination shall be set.

For example, a different feature may be introduced for each repetition number (e.g., R=A, B, C) as shown in Table 8 below (in this case, A, B, and C may be one of 2, 4, and 8).

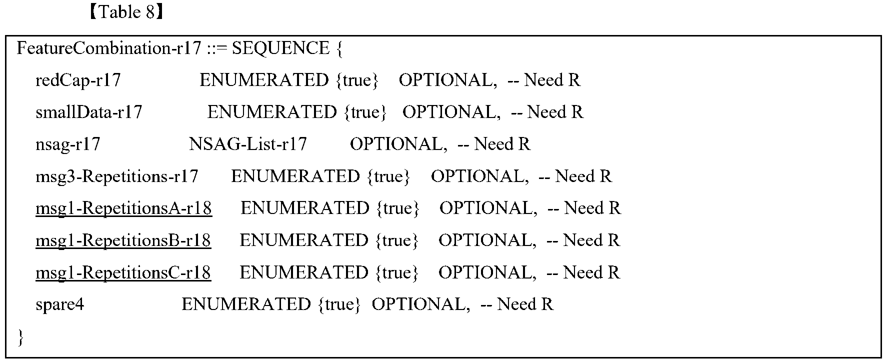

As described above, the base station may configure/indicate PRACH resource partitioning corresponding to each repetition number to the UE through a feature combination method, in a state in which the repetition numbers are configured to different features.

Characteristically, the UE may expect that multiple RACH partitionings, each including multiple PRACH features with different repetition numbers, will not be configured within a specific additional RACH configuration. If the multiple RACH partitionings are configured, the UE may determine the configuration to be invalid.

Additionally, the UE may expect that RACH partitioning consisting of feature combinations between multiple PRACH features with different repetition numbers will not be configured within a specific additional RACH configuration. If such a configuration is configured, the UE may determine the configuration to be invalid.

When different repetition numbers are allocated in the separated RO scheme, the probability of collision between UEs using a specific repetition number can be reduced compared to when different repetition numbers are allocated in a separated preamble in shared RO scheme.

### [Method 2]

A method of allocating multiple PRACH repetition resources with different repetition numbers in a separated preamble in shared RO scheme based on a feature combination method is described below.
A. It is necessary to define the multiple PRACH repetition resources to be distinguished within a specific RACH configuration based on a preamble level so as to allocate the different repetition numbers in the separated preamble in shared RO scheme.

### Alt 2-1)

A method may be considered in which parameters for feature combination are set to be common for msg. 1 repetition, regardless of the repetition number.

According to the related art, allocation of multiple RACH partitionings with the same feature or feature combination within a specific RACH configuration is not supported.

### Alt 2-1-1)

If allocation of multiple RACH partitionings with the same feature or feature combination within a specific RACH configuration is supported in Rel-18 CE, the following embodiments may be applied.

### Alt 2-1-1-1)

The base station may configure/indicate a different repetition number for each RACH partitioning corresponding to a PRACH repetition feature (e.g., Msg. 1 Repetition R18) and/or a feature combination including the feature.
A. That is, as illustrated in FIG. 10, a different repetition number may be configured for each RACH partitioning (e.g., FeatureCombinationPreambles). Each RACH partitioning (e.g., FeatureCombinationPreambles) may be based on FeatureCombinationPreambles included in each RACH-commonconfig (e.g., each rach-ConfigcCommon in FIG. 4). Referring to FIG. 4, the RACH-commonconfig may include i) FeatureCombinationPreambles based on legacy RACH configuration (rach-ConfigCommon based on BWP-UplinkCommon) and/or ii) FeatureCombinationPreambles based on each AdditionalRACH-Config.
   i. In this instance, a PRACH repetition feature (e.g., Msg. 1 Repetition R18) and/or a feature combination including the feature may be configured based on the RACH partitioning (e.g., FeatureCombinationPreambles).

### Alt 2-1-1-2)

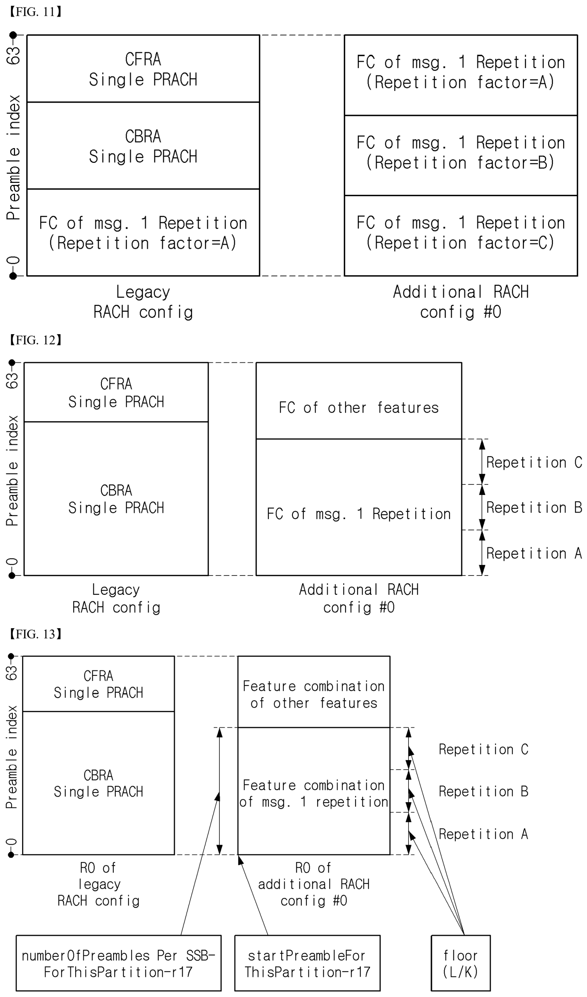

The base station may randomly configure/indicate a repetition number for each RACH partitioning corresponding to a PRACH repetition feature (e.g., Msg. 1 Repetition R18) and/or a feature combination including the feature. That is, the base station may configure/indicate the same repetition number to the RACH partitionings.
A. That is, as illustrated in FIG. 11, a (random) repetition number may be configured/indicated for each RACH partitioning (e.g., FeatureCombinationPreambles). That is, the random repetition number may mean that it is not limited to different repetition numbers, unlike the Alt 2-1-1-1). For example, a repetition number (A) configured based on a RACH partitioning (e.g., RACH partitioning based on Legacy RACH config in FIG. 11) may be the same as a repetition number (A) configured based on another RACH partitioning (e.g., RACH partitioning based on Additional RACH Config #0 in FIG. 11).

Each RACH partitioning (e.g., FeatureCombinationPreambles) may be based on FeatureCombinationPreambles included in each RACH-commonconfig (e.g., each rach-ConfigcCommon of FIG. 4). Referring to FIG. 4, the RACH-commonconfig may include i) FeatureCombinationPreambles based on legacy RACH configuration (rach-ConfigCommon based on BWP-UplinkCommon) and/or ii) FeatureCombinationPreambles based on each AdditionalRACH-Config.
i. In this instance, a PRACH repetition feature (e.g., Msg. 1 Repetition R18) and/or a feature combination including the feature may be configured based on the RACH partitioning (e.g., FeatureCombinationPreambles).

The following embodiments may be applied in relation to the selection of the RACH partitioning.

### Alt 2-1-1-2-A)

The UE may select a RACH partitioning based on a configured/indicated/defined probability value. For example, the probability value may be configured/indicated/defined as follows.
p/M = selection probability of one of M partitionings in legacy RACH configuration
(1-p)/N = selection probability of one of N partitionings in additional RACH configuration

### Alt 2-1-1-2-B)

The UE may randomly select a RACH partitioning.

### Alt 2-1-2)

If (the existing method is maintained and) allocation of multiple RACH partitionings with the same feature or feature combination within a specific RACH configuration is not supported, the following embodiments may be applied.

### Alt 2-1-2-1)

A method of dividing a preamble index section (i.e., starting preamble index and/or the number of preamble indices) per repetition number based on a predefined equation may be considered.
A. The base station may configure/indicate one or multiple repetition numbers to the UE via higher layer signaling (e.g., SIB1, etc.).
   Characteristically, the repetition numbers may be configured/indicated based on parameters (e.g., *RACH-commonconfig*) for legacy RACH configuration and/or additional RACH configuration.
B. One RACH partitioning corresponding to a PRACH repetition feature (e.g., Msg. 1 Repetition R18) and/or a feature combination including the feature may be assigned. A preamble index may be (evenly) divided based on a predefined equation depending on the number of repetition numbers indicated via higher layer signaling (e.g., SIB1, etc.) and their values.
   i. For example, it may be assumed that a total of K repetition numbers (e.g., K=3, R = {A, B, C}) are indicated based on higher layer signaling (e.g., SIB1, etc.), and the total number of preamble indices assigned to RACH partitioning corresponding to the PRACH repetition feature (e.g., Msg. 1 Repetition R18) is L. In this case, the repetition number may be configured/assigned as illustrated in FIG. 12. This is described in detail below.
      1. Among the preamble indices assigned to the RACH partitioning, ceil(L/K) preamble indices starting from a lowest preamble index may be defined for repetition number A.
      2. Among the preamble indices assigned to the RACH partitioning, ceil(L/K) preamble indices starting from (lowest index + ceil(L/K)) preamble index may be defined for repetition number B.
      3. Among the preamble indices assigned to the RACH partitioning, ceil(L/K) preamble indices starting from (lowest index + 2*ceil(L/K)) preamble index may be defined for repetition number C.
         If the ceil(L/K) preamble indices starting from the (lowest index + 2*ceil(L/K)) preamble index are selected for the repetition number C, but the number of the selected preamble indices exceeds L preamble indices assigned by the base station, the exceeding preamble indices may be configured not to be used.
   ii. For another example, it may be assumed that a total of K repetition numbers (e.g., K=3, R = {A, B, C}) are indicated based on higher layer signaling (e.g., SIB1, etc.), and the total number of preamble indices assigned to RACH partitioning corresponding to the PRACH repetition feature (e.g., Msg. 1 Repetition R18) through *startPreambleForThisPartition-r17* and/or *numberOfPreamblesPerSSB-ForThisPartition-r17* is L. In this case, the repetition number may be configured/assigned as illustrated in FIG. 13. This is described in detail below.
      1. Among the preamble indices assigned to the RACH partitioning, floor(L/K) preamble indices starting from a lowest preamble index (e.g., *startPreambleForThisPartition-r17*) may be defined for repetition number A.
      2. Among the preamble indices assigned to the RACH partitioning, floor(L/K) preamble indices starting from (lowest index + floor(L/K)) preamble index may be defined for repetition number B.
      3. Among the preamble indices assigned to the RACH partitioning, floor(L/K) preamble indices starting from (lowest index + 2*floor(L/K)) preamble index may be defined for repetition number C.

If any of L preamble indices is not selected for any repetition number purpose after up to the floor(L/K) preamble indices starting from the (lowest index + 2*floor(L/K)) preamble index are determined for the repetition number C, the following operation/configuration may be applied.

For example, the preamble indices may be configured not to be used for repetition transmissions.

For example, the preamble indices may be configured to use the largest (or smallest) repetition number configured by the base station for the RO, or the preamble indices for the repetition number C in the above example.

iii. For another example, a method of distributing the number of preamble indices more fairly across repetition numbers may be considered. The following case may be assumed.

The base station indicates a total of K repetition numbers (e.g., K=3, R = {A, B, C}) based on higher layer signaling (e.g., SIB1, etc.). The total number of preamble indices assigned to RACH partitioning corresponding to the PRACH repetition feature (e.g., Msg. 1 Repetition R18) through *startPreambleForThisPartition-r17* and/or *numberOfPreamblesPerSSB-ForThisPartition-r17* is L. Each preamble index is referred to as p_idx (e.g., p_idx = *startPreambleForThisPartition-r17, startPreambleForThisPartition-r17+1, startPreambleForThisPartition-r17+2, ..., startPreambleForThisPartition-r17+L-1*).

In the above case, the repetition number may be configured/assigned as follows.
1. Among the preamble indices assigned to the RACH partitioning, preamble indices corresponding to p_idx satisfying mod(p_idx, K) = 0 may be defined for repetition number A.
2. Among the preamble indices assigned to the RACH partitioning, preamble indices corresponding to p_idx satisfying mod(p_idx, K) = 1 may be defined for repetition number B.
3. Among the preamble indices assigned to the RACH partitioning, preamble indices corresponding to p_idx satisfying mod(p_idx, K) = 2 may be defined for repetition number C.

In the above methods, when the number of repetition numbers indicated by the base station based on higher layer signaling (e.g., SIB1, etc.) is K in total (e.g., K=3, R = {A, B, C}), the order of A, B, and C may be defined as follows.

For example, the order of A, B, and C may be the order actually indicated by the base station in the corresponding parameter (e.g., 1st, 2nd, 3rd, etc.).

For example, the order of A, B, and C may be the ascending (or descending) order of repetition numbers indicated by the base station.

For example, the order of A, B, and C corresponding to a result {0, 1, 2} of mod (p_idx, K) may be pre-defined (e.g., defined so that the value with the largest value of the repetition number is mapped to the preamble indices corresponding to mod (p_idx, K) = 0).

Characteristically, the base station may set the L and K values so that the L/K values are always integers (i.e., so that there is no remaining preamble index using the above method). That is, the base station may indicate the L value as one of the integer multiples of the K value, which is the number of repetition numbers configured/indicated for the corresponding RACH resource.

### Alt 2-1-2-2)

A method of dividing a preamble index section (i.e., starting preamble index and/or the number of preamble indices) per repetition number by introducing additional parameters via higher layer signaling (e.g., SIB1, etc.) may be considered.
A. The base station may configure/indicate one or multiple repetition numbers based on higher layer signaling (e.g., SIB1, etc.). Characteristically, the repetition numbers may be configured/indicated based on parameters (e.g., *RACH-commonconfig*) for legacy RACH configuration and/or additional RACH configuration.
B. The base station may assign one RACH partitioning corresponding to a PRACH repetition feature (e.g., Msg. 1 Repetition R18) and/or a feature combination including the feature.

If one repetition number is configured/indicated, a preamble section for the repetition number may be configured through the existing parameters (e.g., *startPreambleForThisPartition-r17, numberOfPreambles PerSSB-ForThisPartition-r17*)*.*

If multiple repetition numbers are configured/indicated, the following operation/configuration may be applied.
i. A preamble section for a lowest (or highest) repetition number may be configured through the existing parameters (e.g., *startPreambleForThisPartition-r17, numberOfPreambles PerSSB-ForThisPartition-r17*). A preamble section for the remaining repetition numbers may be configured based on the following embodiments.

### Alt 2-1-2-2-1)

Pairs of additional parameters (e.g., *additionalstartPreambleForThisPartition-r18, additionalnumberOf PreamblesPerSSB-ForThisPartition-r18*) may be configured/indicated as many as the number of remaining repetition numbers, and a preamble section for next repetition numbers may be configured through these.

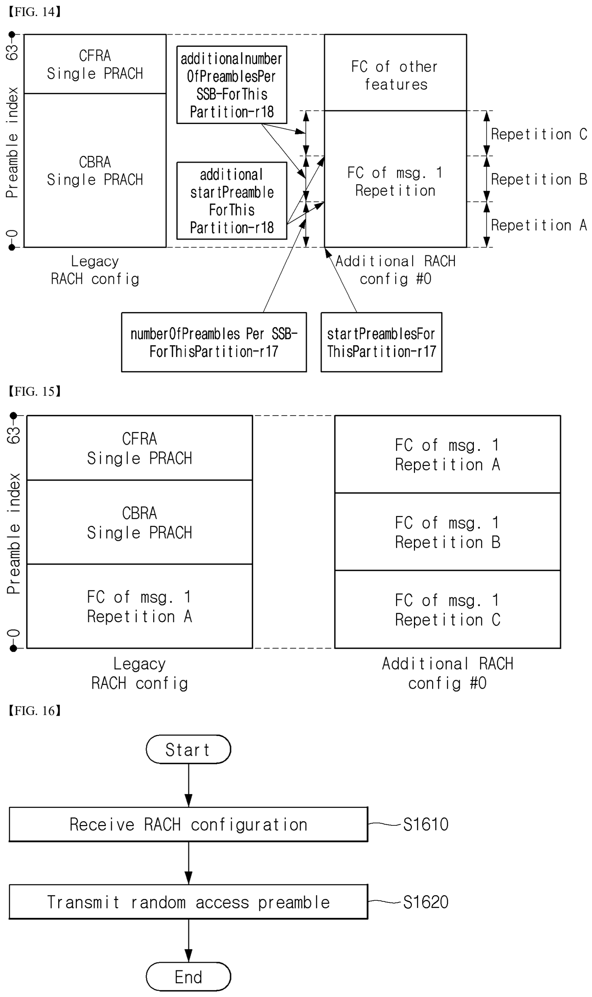

That is, if the total of three repetition numbers (e.g., R = {A, B, C}) are indicated, a preamble section for one repetition number (e.g., A) may be configured through the existing parameter as illustrated in FIG. 14, and a preamble section for the remaining repetition numbers (e.g., B, C) may be configured by adding two pairs of additional parameters.

### Alt 2-1-2-2-2)

One or multiple starting preamble offsets may be configured/indicated to assign the remaining repetitions. That is, an offset from a starting index indicated by the existing parameter may be indicated. In this instance, the number of preambles may be additionally indicated as an additional parameter or may be configured/defined to reuse the existing parameter.

### Alt 2-1-2-2-3)

A preamble section for a next repetition number may be configured/defined to start immediately after a preamble section for a previous repetition number ends without additional parameter. In this case, the number of preambles may be separately indicated or may be configured/defined to reuse the existing parameters.
1. In this instance, the existing parameter representing the number of preambles may be defined to be used as an offset of a starting index.
2. Further, the number of preambles may be additionally indicated as an additional parameter, or may be configured to reuse the existing parameter.

In the above methods, the UE may expect that respective preamble sections corresponding to different repetition numbers are configured not to overlap each other.

### Alt 2-2)

A method of configuring parameters for feature combination as different parameters per repetition number may be considered.

For example, as illustrated in FIG. 15, the parameters for feature combination may be defined to include values of the repetition numbers (e.g., msg. 1 Repetition A, msg. 1 Repetition B, msg. 1 Repetition C).

The base station does not need to separately indicate the repetition number value within RACH configuration, but multiple parameters for feature combination shall be configured.

For example, as shown in Table 9, a different feature may be introduced for each repetition number (e.g., R=A, B, C) (where A, B, and C may be one of 2, 4, and 8).

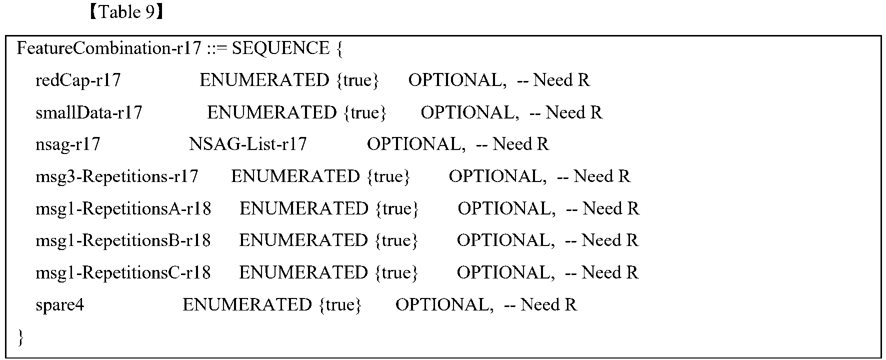

As described above, the base station may configure/indicate PRACH resource partitioning corresponding to each repetition number to the UE through a feature combination method, in a state in which the repetition numbers are configured to different features.

Characteristically, the UE may expect that RACH partitioning including feature combinations of multiple PRACH features with different repetition numbers, will not be configured within a specific additional RACH configuration. If the RACH partitioning is configured, the UE may determine the configuration to be invalid.

The above operation may be applied to all legacy RACH configuration and/or Additional RACH configuration.

### [Method 3]

A method of assigning ROs to multiple PRACH repetition resources with different repetition numbers by distinguishing the ROs allocated to the same RACH configuration based on TDM may be considered.
A. A base station may configure/indicate a repetition number as follows. The repetition number may be configured/indicated based on RACH-commonconfig or FeatureCombinationPreambles. For example, a parameter (e.g., RACH-commonconfig) in each additional RACH configuration (e.g., AdditionalRACH-Config-r17) may include the repetition number. For example, RACH partitioning (e.g., FeatureCombinationPreambles) in RACH-commonconfig may include the repetition number.
   i. As a specific example, the repetition number indicated by the base station may be multiple among {1, 2, 4, 8}.
   ii. For another example, the repetition number indicated by the base station may be one or multiple of {2, 4, 8}. That is, it may be assumed that single transmission is always configured.
B. RO mask parameters as many as the number of repetition numbers indicated by the base station may be configured/indicated based on higher layer signaling (e.g., SIB1, etc.).
   i. The RO mask parameter to be configured for each different repetition number may be a parameter with a size equal to the number of TDMed ROs corresponding to an SSB-to-RO mapping period. Through the RO mask parameter, the TDMed ROs corresponding to a specific repetition number may be defined to be expressed/indicated as a bitmap.
      1. As a specific example, if the total number of ROs located at different time instances within a specific period (e.g., PRACH configuration period, association (pattern) period, etc.) is N, the size of the RO mask parameter may be set to N bits.
         For another example, if the total number of ROs located at different time instances among ROs associated with the same SSB within a specific period (e.g., PRACH configuration period, association (pattern) period, etc.) is M, the size of the RO mask parameter may be set to M bits.
      2. If K (2 or more) repetition numbers are configured/indicated in the corresponding RACH configuration, a total of K (2 or more) RO mask parameters may be indicated, and each RO mask parameter may be indicated differently for each repetition number.
      3. The UE may determine which RO is used for PRACH repetition transmission (or included in an RO group for repetition transmission) based on the N-bit (or M-bit) bitmap, and may perform the repetition transmission using this.
      4. In this instance, the UE may expect that the locations of the ROs indicated by the RO mask parameters configured for different repetition numbers will be allocated without overlapping each other on the time domain.
   ii. Characteristically, the RO mask parameter for repetition number 1 is not separately introduced, and the remaining ROs that are not indicated by the RO mask parameters for the repetition numbers greater than or equal to 2 may be configured/defined as ROs for single PRACH transmission.
   iii. Based on the RO mask parameters for each repetition number configured/indicated by the base station, candidate ROs may be configured/indicated to the UE. The UE may perform the RACH procedure (or configure an RO group) by selecting, as many as the repetition number, ROs corresponding to an UL beam that the UE intends to transmit (i.e., ROs associated with an SSB index selected by the UE) based on the SSB-to-RO mapping among the candidate ROs.
C. It may be assumed that a specific preamble index section is configured/defined by a PRACH repetition feature (e.g., Msg. 1 Repetition R18) and/or a feature combination including the feature through RACH partitioning. The RACH partitioning may only be applied to ROs configured/indicated through the RO mask parameters for the repetition numbers greater than or equal to 2.
   i. That is, ROs that are not selected through the RO mask parameters for the repetition numbers greater than or equal to 2 may be defined as allowing the UE to use the corresponding preamble index section for single RACH transmission purpose, ignoring the RACH partitioning configured/defined by the PRACH repetition feature (e.g., Msg. 1 Repetition R18) and/or the feature combination including the feature.

The proposed methods can be configured/applied to other UL signals/channels such as MSG3 PUSCH, MSGA Preamble/PUSCH and/or PUSCH/PUCCH. Characteristically, the proposed UE/base station operations for PRACH repetition can also be configured/applied as UE/base station operations for other newly introduced features (e.g., repetition transmission features of Msg. 4 HARQ ACK PUCCH). For example, the feature for PUCCH repetition (e.g., pucch-Repetitions-r18) can be configured/applied instead of the feature for the proposed PRACH repetition, and the feature for PUCCH repetition can also be used for the proposed combination method and a method that the UE does not expect. Furthermore, when UE/base station operations for PRACH repetition and/or PUCCH repetition are supported simultaneously, the proposed methods can be configured/applied to all the two channels.

Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

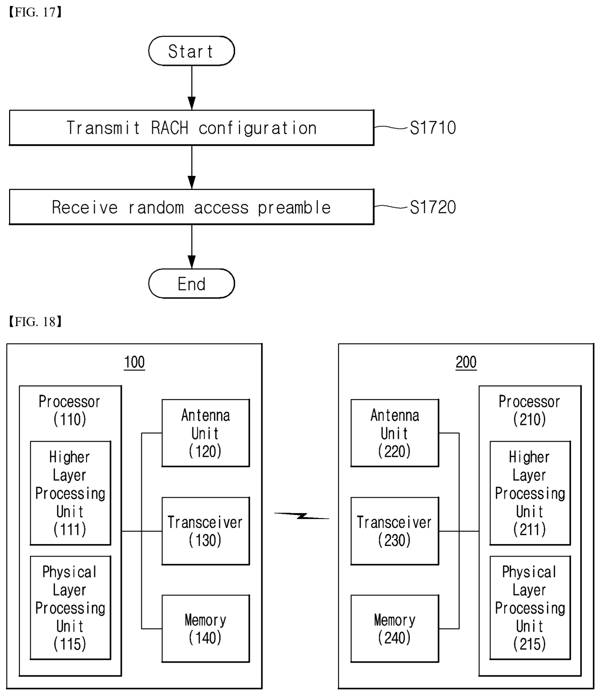

From an implementation perspective, operations of a base station/UE according to the above-described embodiments (e.g., operations based on at least one of the methods 1 to 3) can be processed by a device (e.g., processors 110 and 210 of FIG. 18) of FIG. 18 described below.

Further, the operations of the base station/UE according to the above-described embodiments (e.g., operations based on at least one of the methods 1 to 3) can be stored in a memory (e.g., memories 140 and 240 of FIG. 18) in the form of commands/programs (e.g., instructions, executable codes) for running at least one processor (e.g., processors 110 and 210 of FIG. 18).

Below, the above-described embodiments are described in detail from a UE and base station operation perspective with reference to FIGS. 16 and 17. Methods described below are merely distinguished for convenience of explanation. Thus, it is obvious that partial configuration of any method can be substituted or combined with partial configuration of another method.

FIG. 16 is a flowchart illustrating a method performed by a user equipment (UE) according to an embodiment of the present disclosure.

Referring to FIG. 16, a method performed by a user equipment (UE) according to an embodiment of the present disclosure includes a step S1610 of receiving RACH configuration and a step S1620 of transmitting a random access preamble.

In the step S1610, the UE receives a random access channel (RACH) configuration from a base station.

In the step S1620, the UE transmits a random access preamble to the base station based on a repetition number related to a feature combination.

For example, the random access preamble may be transmitted based on Table 1. Specifically, transmitting the random access preamble based on the repetition number may mean that random access preamble transmission based on one RACH occasion (RO) is performed multiple times. Therefore, repetition transmission of the random access preamble may mean PRACH transmission based on multiple ROs. In this instance, the multiple ROs may be related to the same synchronization signal/physical broadcast channel (SS/PBCH) block index.

According to an embodiment, the RACH configuration (e.g., RACH-ConfigCommon) may include a plurality of preamble configurations. Each of the plurality of preamble configurations may be related to one feature combination. The repetition number may be one of a plurality of repetition numbers based on the plurality of preamble configurations. The present embodiment may be based on the Alt 2-1-1) of the method 2.

For example, the RACH configuration may include RACH configurations based on a bandwidth part (BWP)-uplink common configuration. The BWP-uplink common configuration may be based on BWP-UplinkCommon described with reference to FIG. 4 and Table 7. Specifically, the RACH configurations may include i) a RACH configuration in the BWP-uplink common configuration and ii) a RACH configuration based on each additional RACH configuration in the BWP-uplink common configuration. Each additional RACH configuration may be based on AdditionalRACH-Config-r17 of FIG. 4 and Table 7.

Each preamble configuration (e.g., FeatureCombinationPreambles) based on the RACH configurations may include information for a set of preambles. On a bandwidth part (BWP), a set of preambles associated with each of the multiple repetition numbers may be at most one. That is, the multiple repetition numbers may be based on different values. The BWP may be configured based on the BWP-uplink common configuration.

For example, the multiple repetition numbers may be related to a shared RACH occasion (RO).

For example, the repetition number may be 2, 4 or 8.

For example, one or more features may be indicated based on the feature combination. The one or more features may include MSG1 repetitions. The multiple repetition numbers may be configured based on preamble configurations including a feature combination related to the MSG1 repetitions. More specifically, the multiple repetition numbers may be configured based on the preamble configurations including the feature combination related to the MSG1 repetitions among the preamble configurations based on the RACH configurations.

According to an embodiment, the repetition number may be determined based on a reference signal received power (RSRP) among the multiple repetition numbers. For example, based on the RSRP being lower than an RSRP threshold, a repetition number applicable to a random access procedure among the multiple repetition numbers may be determined. As a specific example, the RSRP threshold may be defined/configured for each repetition number. Based on the RSRP being lower than an RSRP threshold for a specific repetition number (e.g., 2, 4 or 8), the repetition number may be determined as the specific repetition number among the multiple repetition numbers (e.g., 2, 4, 8).

The operations based on the steps S1610 and S1620 described above may be implemented by a device of FIG. 18. For example, a UE 200 may control one or more transceivers 230 and/or one or more memories 240 so as to perform the operations based on the steps S1610 and S1620.

Below, the above-described embodiments are described in detail from a perspective of base station operation.

Steps S1710 and S1720 described below correspond to the steps S1610 and S1620 described with reference to FIG. 16. Considering the above correspondence, redundant description is omitted. That is, the detailed description of the base station operation described below can be replaced with the description/embodiment of FIG. 16 corresponding to the base station operation. For example, the description/embodiment of the steps S1610 and S1620 of FIG. 16 may be additionally applied to the base station operation of the steps S1710 and S1720 described below.

FIG. 17 is a flowchart illustrating a method performed by a base station according to another embodiment of the present disclosure.

Referring to FIG. 17, a method performed by a base station according to another embodiment of the present disclosure includes a step S1710 of transmitting RACH configuration and a step S1720 of receiving a random access preamble.

In the step S1710, the base station transmits a random access channel (RACH) configuration to a UE.

In the step S1720, the base station receives a random access preamble from the UE based on a repetition number related to a feature combination.

The operations based on the steps S1710 and S1720 described above may be implemented by a device of FIG. 18. For example, a base station 100 may control one or more transceivers 130 and/or one or more memories 140 so as to perform the operations based on the steps S1710 and S1720.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system).

A device to which an embodiment of the present disclosure is applicable (a device implementing the method/operation according to an embodiment of the present disclosure) is described below with reference to FIG. 18.

FIG. 18 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE), the method comprising:
receiving a Random Access CHannel (RACH) configuration; and
based on a repetition number related to a feature combination, transmitting a random access preamble,
wherein the RACH configuration includes a plurality of preamble configurations,
wherein each of the plurality of preamble configurations is related to one feature combination, and
wherein the repetition number is one of a plurality of repetition numbers based on the plurality of preamble configurations.

2. The method of claim 1, wherein the repetition number is determined based on a Reference Signal Received Power (RSRP) among the plurality of repetition numbers.

3. The method of claim 1, wherein the RACH configuration includes RACH configurations based on a BandWidth Part (BWP)-uplink common configuration.

4. The method of claim 3, wherein the RACH configurations include i) a RACH configuration in the BWP-uplink common configuration and ii) a RACH configuration based on each additional RACH configuration in the BWP-uplink common configuration.

5. The method of claim 4, wherein each preamble configuration based on the RACH configurations includes information for a set of preambles, and
wherein, on a bandwidth part (BWP), a set of preambles associated with each of the plurality of repetition numbers is at most one.

6. The method of claim 5, wherein the plurality of repetition numbers are based on different values.

7. The method of claim 1, wherein one or more features are indicated based on the feature combination, and
wherein the one or more features include MSG1 repetitions.

8. The method of claim 7, wherein the plurality of repetition numbers are configured based on preamble configurations including a feature combination related to the MSG1 repetitions.

9. The method of claim 8, wherein the plurality of repetition numbers are related to a shared RACH occasion (RO).

10. The method of claim 1, wherein the repetition number is 2, 4 or 8.

11. A user equipment (UE) comprising:
one or more transceivers;
one or more processors; and
one or more memories connected to the one or more processors and storing instructions,
wherein the instructions configure the one or more processors to perform all steps of a method according to any one of claims 1 to 10 based on being executed by the one or more processors.

12. A device comprising:
one or more memories; and
one or more processors operably connected to the one or more memories,
wherein the one or more memories store instructions that configure the one or more processors to perform all steps of a method according to any one of claims 1 to 10 based on being executed by the one or more processors.

13. One or more non-transitory computer readable mediums storing instructions,
wherein the instructions executable by one or more processors configure the one or more processors to perform all steps of a method according to any one of claims 1 to 10.

14. A method performed by a base station, the method comprising:
transmitting a Random Access CHannel (RACH) configuration; and
based on a repetition number related to a feature combination, receiving a random access preamble,
wherein the RACH configuration includes a plurality of preamble configurations,
wherein each of the plurality of preamble configurations is related to one feature combination, and
wherein the repetition number is one of a plurality of repetition numbers based on the plurality of preamble configurations.

15. A base station comprising:
one or more transceivers;
one or more processors; and
one or more memories connected to the one or more processors and storing instructions,
wherein the instructions configure the one or more processors to perform all steps of a method according to claim 14 based on being executed by the one or more processors.
